# EUROPEAN PATENT APPLICATION

(11) **EP 4 794 379 A1**
(43) Date of publication of application: **19.08.2026**
(21) Application number: 24884457.3
(22) Date of filing: 18.10.2024
(51) Int. Cl.: H04W 24/10

(54) **COMMUNICATION METHOD AND COMMUNICATION APPARATUS**

(30) Priority: 31.10.2023 CN 202311442792
(71) Applicant: HUAWEI TECHNOLOGIES CO., LTD., Shenzhen, Guangdong 518129 (CN)
(72) Inventor: GU, Zhifang, Shenzhen, Guangdong 518129 (CN)
(74) Representative: MERH-IP Matias Erny Reichl Hoffmann Patentanwälte PartG mbB
(86) International application number: PCT/CN2024/125674
(87) International publication number: WO 2025/092453

(57) **Abstract**

This application provides a communication method, applied to a terminal device. The communication method includes: receiving, from a network device, measurement configuration information including an event trigger condition; measuring, by a physical PHY layer, a to-be-measured reference signal, determining that the event trigger condition is met, and sending first indication information to a media access control MAC layer; and sending, by the MAC layer, a measurement result to the network device based on the first indication information via MAC layer signaling. In this application, the PHY layer may measure the to-be-measured reference signal to determine the measurement result. The MAC layer may send the measurement result via the MAC layer signaling (for example, a MAC CE), so that the network device can perform, based on the measurement result, scheduling policy update or mobility management like cell handover or beam switching. According to the method, uplink resource occupation of the terminal device can be reduced while prompt reporting of the measurement result is provided.

## Description

This application claims priority to Chinese Patent Application No. 202311442792.3, filed with the China National Intellectual Property Administration on October 31, 2023 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

In mobile communication systems, a terminal device may report a reference signal measurement result of a current serving cell and neighboring cells to a network device. The measurement results reported by the terminal device are extremely important for the network device to manage the terminal devices. For example, when the measurement results indicate that channel quality of the current serving cell is good, the network device may schedule more data packets and perform scheduling policy update. When the measurement results indicate that channel quality of a specific neighboring cell is better than that of the current serving cell, the network device may indicate the terminal device to perform a mobility management process like cell handover or beam switching.

However, the terminal device's reporting of the measurement results occupies uplink transmission resources. How to efficiently perform measurement reporting is worth studying.

### SUMMARY

This application provides a communication method and a communication apparatus, to reduce uplink resource occupation of a terminal device while prompt reporting of measurement results is provided.

According to a first aspect, a communication method is provided. The method is performed by a terminal device. The terminal device herein may be the terminal device, or may be a processor, a module, a chip, a chip system, or the like that is in the terminal device and that implements the method. The method includes: Measurement configuration information is received from a network device, where the measurement configuration information includes an event trigger condition; a physical PHY layer measures a to-be-measured reference signal, determines that the event trigger condition is met, and sends first indication information to a media access control MAC layer; and the MAC layer sends a measurement result to the network device based on the first indication information via MAC layer signaling.

In this implementation, the PHY layer of the terminal device may measure the to-be-measured reference signal. If it is determined that the measurement result obtained through the measurement meets the event trigger condition, the PHY layer may send the first indication information to the MAC layer. The MAC layer may send the measurement result based on the first indication information via the MAC layer signaling (for example, a MAC CE). Therefore, the network device may receive the measurement result, and perform, based on the measurement result, scheduling policy update or mobility management like cell handover or beam switching. In this application, the PHY layer determines event triggering, and the measurement result is sent via the MAC layer signaling. When an event is triggered and there is an uplink resource, the terminal device can provide prompt reporting of the measurement result. In addition, uplink resource occupation of the terminal device can be further reduced.

With reference to the first aspect, in some implementations of the first aspect, that the MAC layer sends the measurement result to the network device based on the first indication information via the MAC layer signaling includes: The MAC layer receives the first indication information, to trigger the MAC layer to perform reporting; and sends the measurement result to the network device via the MAC layer signaling.

In this implementation, the PHY layer of the terminal device may measure the to-be-measured reference signal. If it is determined that the measurement result obtained through the measurement meets the event trigger condition, the PHY layer may send the first indication information to the MAC layer, to trigger the MAC layer to perform reporting. Then, the terminal device may send the measurement result via the MAC layer signaling. In other words, the MAC layer may enter a reporting triggered state. When the MAC layer is in the reporting triggered state, the measurement result may be sent via the MAC layer signaling.

With reference to the first aspect, in some implementations of the first aspect, that the MAC layer sends the measurement result to the network device based on the first indication information via the MAC layer signaling includes: A periodic reporting timer is started when the MAC layer receives the first indication information; and when the periodic reporting timer expires, the MAC layer is triggered to perform reporting, the periodic reporting timer is started, and the measurement result is sent via the MAC layer signaling.

In this implementation, if the PHY layer determines that the measurement result of the to-be-measured reference signal always meets the event trigger condition, the PHY layer does not need to send the first indication information to the MAC layer for a plurality of times. The periodic reporting timer may be started after the MAC layer receives the first indication information for the first time. In addition, when the periodic reporting timer expires, the MAC layer can still be triggered to perform reporting and the periodic reporting timer is restarted, and the measurement result is sent via the MAC layer signaling. In this way, repeated sending of the first indication information for a plurality of times can be avoided, and inter-layer interaction complexity can be reduced.

With reference to the first aspect, in some implementations of the first aspect, the method further includes: After the measurement result is sent to the network device via the MAC layer signaling, the reporting triggering for the MAC layer is canceled.

In this implementation, if the MAC layer reports the measurement result via the MAC layer signaling, the reporting triggering for the MAC layer may be canceled, that is, the reporting triggered state of the MAC layer may be canceled, to avoid a case in which reporting is continuously performed by using an uplink resource because the MAC layer is always in the triggered state. If the MAC layer further needs to report the measurement result, the MAC layer needs to receive the first indication information again or wait for the periodic reporting timer to expire again.

With reference to the first aspect, in some implementations of the first aspect, the method further includes: The periodic reporting timer is started when the MAC layer receives the first indication information; the PHY layer sends second indication information to the MAC layer when determining that the event trigger condition is not met; and the MAC layer stops the periodic reporting timer based on the second indication information.

In this implementation, if the MAC layer receives the first indication information sent by the PHY layer, the periodic reporting timer may be started. If the PHY layer determines that the measurement result of the to-be-measured reference signal does not meet the event trigger condition, the PHY layer may send the second indication information to the MAC layer, and the MAC layer may stop the periodic reporting timer based on the second indication information, so that the MAC layer does not need to send the measurement result to the network device.

With reference to the first aspect, in some implementations of the first aspect, the MAC layer signaling includes a MAC CE. Optionally, the MAC layer signaling may further include other control signaling, for example, MAC layer control signaling that may appear in a future network system.

With reference to the first aspect, in some implementations of the first aspect, the MAC CE includes at least one of the following: an identifier of a reference signal set, an identifier of a serving cell, an identifier of a candidate cell, an identifier of a secondary cell, an identifier of a reference signal, a to-be-measured quantity, or a measurement result corresponding to a to-be-measured quantity.

With reference to the first aspect, in some implementations of the first aspect, that the physical PHY layer measures the to-be-measured reference signal, determines that the event trigger condition is met, and sends the first indication information to the media access control MAC layer includes: The PHY layer measures a first reference signal and a second reference signal, determines that both the first reference signal and the second reference signal meet the event trigger condition, and sends the first indication information to the MAC layer; and that the MAC layer sends the measurement result to the network device based on the first indication information via the MAC layer signaling includes: The MAC layer sends, based on the first indication information and a preset rule via the MAC layer signaling, a measurement result corresponding to the first reference signal to the network device.

In this implementation, if uplink resources are insufficient, the measurement result corresponding to the first reference signal and a measurement result corresponding to the second reference signal cannot be simultaneously sent via the MAC layer signaling. In this case, the MAC layer may apply the preset rule to select the measurement result that corresponds to the first reference signal and that meets the preset rule, so that the MAC layer signaling gives priority to send the measurement result corresponding to the first reference signal. This is beneficial for timely reporting of the more crucial measurement result.

With reference to the first aspect, in some implementations of the first aspect, the measurement configuration information further includes the preset rule, and the preset rule includes at least one of the following: selecting the measurement result of a candidate cell based on signal strength; selecting the measurement result of a reference signal set based on signal strength; selecting the measurement result of a reference signal based on signal strength; selecting the measurement result based on a measurement result of a special cell; or selecting the measurement result based on a measurement result of a reference signal received power RSRP.

It should be noted that, in addition to the foregoing preset rule, another preset rule may be further included. For example, the network device may configure priorities of different candidate cells/reference signal sets/reference signals. When the terminal device needs to perform MAC CE truncation, the terminal device selects a measurement result corresponding to a candidate cell/reference signal set/reference signal with a high priority, and includes the measurement result in the MAC CE.

In addition, the foregoing preset rules may be simultaneously used, or may be partially used. Optionally, the network device may specify a to-be-used preset rule in the measurement configuration information, or a to-be-used preset rule may be predefined in a protocol.

With reference to the first aspect, in some implementations of the first aspect, the method further includes: When there is no available uplink resource for sending the MAC layer signaling, scheduling request SR information is sent to the network device, where the scheduling request information is used to request an uplink resource for sending the measurement result.

In this implementation, if the terminal device has no uplink resource for sending the MAC layer signaling, the terminal device may send the scheduling request information to the network device, to request the network device to allocate an uplink resource to perform uplink transmission of the measurement result. Specifically, when there is no available uplink resource for sending the MAC layer signaling (for example, a MAC CE), the MAC layer of the terminal device triggers an SR, and may indicate the PHY layer to send a PUCCH SR.

With reference to the first aspect, in some implementations of the first aspect, the method further includes: receiving a first scheduling request configuration and a second scheduling request configuration from the network device; and when a data amount of the measurement result is greater than or equal to a first preset value, selecting the first scheduling request configuration for sending the scheduling request information; or when the data amount of the measurement result is less than the first preset value, selecting the second scheduling request configuration for sending the scheduling request information.

In this implementation, the terminal device may select a suitable scheduling request configuration based on the data amount of the measurement result. In this way, the uplink resource allocated by the network device can be fully used, to avoid a case in which the uplink resource is insufficient for sending the MAC CE, and avoid a waste of excessive uplink resources.

With reference to the first aspect, in some implementations of the first aspect, the event trigger condition includes a cell-level event trigger condition, a beam-level event trigger condition, and a reference signal set-level event trigger condition, and the measurement result includes a cell-level measurement result, a beam-level measurement result, and a reference signal set-level measurement result.

The cell-level event trigger condition may include any one of the following: a measurement result of a serving cell is greater than a preset threshold; a measurement result of a serving cell is less than a preset threshold; a measurement result of a neighboring cell is greater than a measurement result of a serving cell/special cell by a preset threshold; a measurement result of a neighboring cell is greater than a preset threshold; a measurement result of a serving cell is less than a first threshold, and a measurement result of a neighboring cell is greater than a threshold; or a measurement result of a neighboring cell is greater than a measurement result of a secondary cell by a preset threshold.

The beam-level event trigger condition may include any one of the following: a measurement result of a beam being used by a serving cell is greater than a preset threshold; a measurement result of a beam being used by a serving cell is less than a preset threshold; a measurement result of a beam of a neighboring cell is greater than a measurement result of a beam being used by a serving cell/special cell by a preset threshold; a measurement result of a beam of a neighboring cell is greater than a preset threshold; a measurement result of a beam being used by a serving cell is less than a third threshold, and a measurement result of a beam of a neighboring cell is greater than a fourth threshold; or a measurement result of a beam of a neighboring cell is greater than a measurement result of a beam of a secondary cell by a preset threshold.

The reference signal set-level event trigger condition may include any one of the following: a measurement result of a reference signal set corresponding to a serving cell is greater than a preset threshold; a measurement result of a reference signal set corresponding to a serving cell is less than a preset threshold; a measurement result of a reference signal set corresponding to a neighboring cell is greater than a measurement result of a reference signal set corresponding to a serving cell/special cell by a preset threshold; a measurement result of a reference signal set corresponding to a neighboring cell is greater than a preset threshold; a measurement result of a reference signal set corresponding to a serving cell is less than a fifth threshold, and a measurement result of a reference signal set corresponding to a neighboring cell is greater than a sixth threshold; or a measurement result of a reference signal set corresponding to a neighboring cell is greater than a measurement result of a reference signal set corresponding to a secondary cell by a preset threshold.

It should be noted that, in an implementation of the first aspect, the PHY layer measures the reference signal and determines whether the event trigger condition is met. If the event trigger condition is met, the measurement result may be sent to the MAC layer, and the MAC layer is indicated to perform reporting. In some other implementations than the implementations of the first aspect, alternatively, the PHY layer measures the reference signal, and the MAC layer determines whether the event trigger condition is met and performs reporting if the event trigger condition is met. Alternatively, the MAC layer measures the reference signal and determines whether the event trigger condition is met, and the MAC layer performs reporting if the event trigger condition is met. Alternatively, the PHY layer measures the reference signal and determines whether the event trigger condition is met, and the PHY layer performs reporting if the event trigger condition is met. Details are as follows.

In some possible implementations, the communication method may include: A terminal device receives measurement configuration information sent by a network device, where the measurement configuration information includes an event trigger condition; a PHY layer of the terminal device measures a to-be-measured reference signal, and sends a measurement result obtained through the measurement to a MAC layer; and the MAC layer may determine whether the measurement result of the to-be-measured reference signal meets the event trigger condition, that is, the MAC layer determines whether an event is met/triggered. If it is determined that the event trigger condition is met, the measurement result is sent to the network device via MAC layer signaling.

In some other possible implementations, the communication method may include: A terminal device receives measurement configuration information sent by a network device, where the measurement configuration information includes an event trigger condition; a MAC layer of the terminal device measures a to-be-measured reference signal, and determines whether a measurement result of the to-be-measured reference signal meets the event trigger condition, that is, the MAC layer determines whether an event is met/triggered. If it is determined that the event trigger condition is met, the measurement result is sent to the network device via MAC layer signaling.

In some other possible implementations, the communication method may include: A terminal device receives measurement configuration information sent by a network device, where the measurement configuration information includes an event trigger condition; a PHY layer of the terminal device measures a to-be-measured reference signal, and determines whether a measurement result of the to-be-measured reference signal meets the event trigger condition, that is, the PHY layer determines whether an event is met/triggered. If it is determined that the event trigger condition is met, the measurement result is sent to the network device via physical layer signaling (for example, uplink control information UCI).

According to a second aspect, a communication method is provided. The method is performed by a network device. The network device herein may be the network device, or may be a processor, a module, a chip, or a chip system that is in the network device and that implements the method. The method includes: sending measurement configuration information to a terminal device, where the measurement configuration information includes an event trigger condition, and the event trigger condition is a preset condition that a measurement result of a measured quantity needs to meet; and receiving a measurement result sent by the terminal device, where the measurement result is obtained by measuring a to-be-measured reference signal, and the measurement result is a measurement result that meets the event trigger condition.

In this implementation, the network device may send the measurement configuration information to the terminal device, and the measurement configuration information may include the event trigger condition, so that the terminal device can determine the measurement result that meets the event trigger condition and send the measurement result to the network device. Therefore, the network device may receive the measurement result, and perform, based on the measurement result, scheduling policy update or mobility management like cell handover or beam switching.

With reference to the second aspect, in some implementations of the second aspect, the method further includes: receiving scheduling request information sent by the terminal device, where the scheduling request information is used to request an uplink resource for sending the measurement result.

In this implementation, the network device may receive the scheduling request information of the terminal device, to allocate, to the terminal device, the uplink resource for sending the measurement result, so that the terminal device can successfully send the measurement result.

With reference to the second aspect, in some implementations of the second aspect, the method further includes: sending a first scheduling request configuration and a second scheduling request configuration to the terminal device, where the first scheduling request configuration is used when a data amount of the measurement result reported by the terminal device is greater than or equal to a first preset value, and the second scheduling request configuration is used when the data amount of the measurement result reported by the terminal device is less than the first preset value.

In this implementation, the network device may allocate scheduling request configurations of different sizes to the terminal device, so that the terminal device can select a suitable scheduling request configuration based on the data amount of the measurement result that needs to be sent, thereby fully using the uplink resource allocated by the network device.

With reference to the second aspect, in some implementations of the second aspect, the method further includes: performing, based on the measurement result, scheduling policy update or mobility management like cell handover or beam switching.

In this implementation, after receiving the measurement result, the network device may learn of a current channel status, to perform scheduling policy update or mobility management like cell handover or beam switching. It should be understood that, in addition to performing, based on the measurement result, scheduling policy update or mobility management like cell handover or beam switching, the network device may further perform another operation based on the measurement result.

With reference to the second aspect, in some implementations of the second aspect, the MAC layer signaling includes a MAC CE. Optionally, the MAC layer signaling may further include other control signaling, for example, MAC layer control signaling that may appear in a future network system.

With reference to the second aspect, in some implementations of the second aspect, the MAC CE includes at least one of the following: an identifier of a reference signal set, an identifier of a serving cell, an identifier of a candidate cell, an identifier of a secondary cell, an identifier of a reference signal, a to-be-measured quantity, or a measurement result corresponding to a to-be-measured quantity.

With reference to the second aspect, in some implementations of the second aspect, the event trigger condition includes a cell-level event trigger condition, a beam-level event trigger condition, and a reference signal set-level event trigger condition, and the measurement result includes a cell-level measurement result, a beam-level measurement result, and a reference signal set-level measurement result.

According to a third aspect, a communication apparatus is provided. The communication apparatus includes a transceiver unit and a processing unit. The transceiver unit is configured to receive measurement configuration information from a network device, where the measurement configuration information includes an event trigger condition. The processing unit is configured to: measure a to-be-measured reference signal, and determine that the event trigger condition is met. The transceiver unit is further configured to send first indication information to a media access control MAC layer. The transceiver unit is further configured to send a measurement result to the network device based on the first indication information via MAC layer signaling.

With reference to the third aspect, in some implementations of the third aspect, the transceiver unit is further configured to: receive the first indication information, to trigger the MAC layer to perform reporting; and send the measurement result to the network device via the MAC layer signaling.

With reference to the third aspect, in some implementations of the third aspect, the processing unit is further configured to start a periodic reporting timer when the first indication information is received; and the transceiver unit is further configured to: when the periodic reporting timer expires, trigger the MAC layer to perform reporting, restart the periodic reporting timer, and send the measurement result via the MAC layer signaling.

With reference to the third aspect, in some implementations of the third aspect, the processing unit is further configured to: after the measurement result is sent to the network device via the MAC layer signaling, cancel the reporting triggering for the MAC layer.

With reference to the third aspect, in some implementations of the third aspect, the processing unit is further configured to start the periodic reporting timer when the first indication information is received; the transceiver unit is further configured to send second indication information to the MAC layer if it is determined that the event trigger condition is not met; and the processing unit is further configured to stop the periodic reporting timer based on the second indication information.

With reference to the third aspect, in some implementations of the third aspect, the processing unit is further configured to: measure a first reference signal and a second reference signal, and determine that both the first reference signal and the second reference signal meet the event trigger condition; the sending unit is further configured to send the first indication information to the MAC layer; and the transceiver unit is further configured to send, based on the first indication information and a preset rule via the MAC layer signaling, a measurement result corresponding to the first reference signal to the network device.

With reference to the third aspect, in some implementations of the third aspect, the measurement configuration information further includes the preset rule, and the preset rule includes at least one of the following: selecting the measurement result of a candidate cell based on signal strength; selecting the measurement result of a reference signal set based on signal strength; selecting the measurement result of a reference signal based on signal strength; selecting the measurement result based on a measurement result of a special cell; or selecting the measurement result based on a measurement result of a reference signal received power RSRP.

With reference to the third aspect, in some implementations of the third aspect, the transceiver unit is further configured to: when there is no available uplink resource for sending the MAC layer signaling, send scheduling request information to the network device, where the scheduling request information is used to request an uplink resource for sending the measurement result.

With reference to the third aspect, in some implementations of the third aspect, the transceiver unit is further configured to receive a first scheduling request configuration and a second scheduling request configuration from the network device; and the processing unit is further configured to: when a data amount of the measurement result is greater than or equal to a first preset value, select the first scheduling request configuration for sending the scheduling request information; or the processing unit is further configured to: when the data amount of the measurement result is less than the first preset value, select the second scheduling request configuration for sending the scheduling request information.

With reference to the third aspect, in some implementations of the third aspect, the MAC layer signaling includes a MAC CE. Optionally, the MAC layer signaling may further include other control signaling, for example, MAC layer control signaling that may appear in a future network system.

With reference to the third aspect, in some implementations of the third aspect, the MAC CE includes at least one of the following: an identifier of a reference signal set, an identifier of a serving cell, an identifier of a candidate cell, an identifier of a secondary cell, an identifier of a reference signal, a to-be-measured quantity, or a measurement result corresponding to a to-be-measured quantity.

With reference to the third aspect, in some implementations of the third aspect, the event trigger condition includes a cell-level event trigger condition, a beam-level event trigger condition, and a reference signal set-level event trigger condition, and the measurement result includes a cell-level measurement result, a beam-level measurement result, and a reference signal set-level measurement result.

According to a fourth aspect, a communication apparatus is provided. The communication apparatus includes a transceiver unit. The transceiver unit is configured to: send measurement configuration information to a terminal device, where the measurement configuration information includes an event trigger condition, and the event trigger condition is a preset condition that a measurement result of a measured quantity needs to meet; and receive a measurement result sent by the terminal device, where the measurement result is obtained by measuring a to-be-measured reference signal.

With reference to the fourth aspect, in some implementations of the fourth aspect, the transceiver unit is configured to receive scheduling request information from the terminal device, where the scheduling request information is used to request an uplink resource for sending the measurement result.

With reference to the fourth aspect, in some implementations of the fourth aspect, the transceiver unit is configured to send a first scheduling request configuration and a second scheduling request configuration to the terminal device, where the first scheduling request configuration is used when a data amount of the measurement result reported by the terminal device is greater than or equal to a first preset value, and the second scheduling request configuration is used when the data amount of the measurement result reported by the terminal device is less than the first preset value.

With reference to the fourth aspect, in some implementations of the fourth aspect, the communication apparatus further includes a processing unit. The processing unit is configured to perform, based on the measurement result, scheduling policy update or mobility management like cell handover or beam switching.

With reference to the fourth aspect, in some implementations of the fourth aspect, the MAC layer signaling includes a MAC CE. Optionally, the MAC layer signaling may further include other control signaling, for example, MAC layer control signaling that may appear in a future network system.

With reference to the fourth aspect, in some implementations of the fourth aspect, the MAC CE includes at least one of the following: an identifier of a reference signal set, an identifier of a serving cell, an identifier of a candidate cell, an identifier of a secondary cell, an identifier of a reference signal, a to-be-measured quantity, or a measurement result corresponding to a to-be-measured quantity.

With reference to the fourth aspect, in some implementations of the fourth aspect, the event trigger condition includes a cell-level event trigger condition, a beam-level event trigger condition, and a reference signal set-level event trigger condition, and the measurement result includes a cell-level measurement result, a beam-level measurement result, and a reference signal set-level measurement result.

According to a fifth aspect, a communication apparatus is provided, where the communication apparatus includes a processor, the processor is coupled to a memory, the memory is configured to store a computer program or instructions, and the processor is configured to execute the computer program or the instructions in the memory, to cause the apparatus to perform the method according to any one of the first aspect or the possible implementations of the first aspect, or the method according to any one of the second aspect or the possible implementations of the second aspect.

According to a sixth aspect, a computer-readable storage medium is provided, where the computer-readable storage medium stores a computer program or instructions; and when the computer program or the instructions are run on a computer, the computer is caused to perform the method according to any one of the first aspect or the possible implementations of the first aspect, or the method according to any one of the second aspect or the possible implementations of the second aspect.

According to a seventh aspect, a computer program product is provided, where the computer program product includes instructions; and when the instructions are run on a computer, the computer is caused to perform the method according to any one of the first aspect or the possible implementations of the first aspect, or the method according to any one of the second aspect or the possible implementations of the second aspect.

According to an eighth aspect, a chip is provided, where the chip includes at least one processor, and when program instructions are executed by the at least one processor, the method according to any one of the first aspect or the possible implementations of the first aspect, or the method according to any one of the second aspect or the possible implementations of the second aspect is performed.

It may be understood that any communication apparatus, computer program product, computer-readable storage medium, chip, or the like provided above is configured to perform the corresponding method provided above. Therefore, for beneficial effects that can be achieved by the communication apparatus, the computer program product, the computer-readable storage medium, the chip, or the like, refer to beneficial effects in the corresponding method. Details are not described herein again.

### BRIEF DESCRIPTION OF DRAWINGS

FIG. 1 is a diagram of a relationship between a special cell SpCell and a secondary cell SCell according to an embodiment of this application;
FIG. 2 is a diagram of a network architecture of a communication system according to an embodiment of this application;
FIG. 3 is a schematic flowchart of a method for reporting a measurement result according to this application;
FIG. 4 is a schematic flowchart of another method for reporting a measurement result according to this application;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a block diagram of a communication apparatus according to this application;
FIG. 9 is another block diagram of a communication apparatus according to this application.

### DESCRIPTION OF EMBODIMENTS

The following describes technical solutions of this application with reference to accompanying drawings.

For ease of understanding embodiments of this application, before embodiments of this application are described, the following descriptions are first provided.

In this application, "indicating" or "indicate" may include a direct indication and an indirect indication, or "indicating" or "indicate" may be an explicit indication and/or an implicit indication. For example, when a piece of information is described as indicating information I, the information may directly indicate I or indirectly indicate I, but it does not necessarily indicate that the information carries I. For another example, implicit indication may be based on a location and/or a resource used for transmission; and explicit indication may be based on one or more parameters, and/or one or more indexes, and/or one or more bit patterns represented by the explicit indication.

In the following embodiments, first, second, third, fourth, and various numbers are merely used for differentiation for ease of description, but are not used to limit the scope of embodiments of this application. For example, different messages are differentiated.

"Predefinition" may be implemented by pre-storing corresponding code or a corresponding table in a device, or may be implemented in another manner of indicating related information. A specific implementation of "predefinition" is not limited in this application. "Storage" may mean storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The terms "include", "have", and their variants all mean "include but are not limited to", unless otherwise specifically emphasized in another manner. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. "Higher than" described below may also be replaced with "above", "greater than", or the like. This is not limited in this application.

In embodiments of this application, related descriptions about sending a message, information, or data by a network element A to a network element B, and receiving, by the network element B, the message, the information, or the data from the network element A are intended to describe a network element to which the message, the information, or the data is to be sent. Whether the message, the information, or the data is directly sent or indirectly sent via another network element is not limited.

In embodiments of this application, descriptions such as "when", "in a case", and "if" all mean that a device performs corresponding processing in a specific objective situation, but are not intended to limit time, do not require that the device has a determining action during implementation, and do not mean any other limitation.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, a system like a 6th generation (6th generation, 6G) system evolved from 5G, and a non-terrestrial network (non-terrestrial network, NTN) system like an inter-satellite communication system or a satellite communication system. The technical solutions provided in embodiments of this application may be further applied to device-to-device (device-to-device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

In embodiments of this application, a network device may be any device having a wireless transceiver function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, WI-FI) system, a wireless relay node, a wireless backhaul node, and the like. Alternatively, the device may be a next generation NodeB (next generation NodeB, gNB) in a 5G system, for example, an NR system, or one or a group of (including a plurality of antenna panels) antenna panels of a base station in the 5G system. Alternatively, the device may be a network node, for example, a baseband unit (BBU), a distributed unit (distributed unit, DU), or a central unit (central unit, CU) that is included in a gNB, or may be a base station in a next generation (for example, 6th generation (6th generation, 6G)) communication system.

In some deployments, the gNB may include a CU and a DU. For example, the CU implements some functions of the gNB, and the DU implements some functions of the gNB. For example, the CU is responsible for processing a non-real-time protocol and a service, and implements functions of a radio resource control (radio resource control, RRC) layer and a packet data convergence layer protocol (packet data convergence protocol, PDCP) layer. The DU may include functions of a radio link control (radio link control, RLC) layer, functions of a media access control (media access control, MAC) layer, and some functions of a physical (physical, PHY) layer.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal device may be: a mobile phone, a tablet computer, a computer with a wireless transceiver function (such as a notebook computer or a palmtop computer), a mobile internet device (mobile internet device, MID), a virtual reality (virtual reality, VR) device, an augmented reality (augmented reality, AR) device, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, a cellular phone, a cordless phone, a session initiation protocol (session initiation protocol, SIP) phone, a wireless local loop (wireless local loop, WLL) station, a personal digital assistant (personal digital assistant, PDA), a handheld device or compute device with a wireless communication function or another processing device, vehicle-mounted device, or wearable device connected to a wireless modem, a terminal device in a 5G network, or a terminal device in a future evolved public land mobile network (public land mobile network, PLMN).

The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (internet of things, IoT) system. An IoT is an important part of future development of information technologies. A main technical feature of the IoT is connecting a thing to a network by using a communication technology, to implement an intelligent network for interconnection between a person and a machine or between things. The IoT technology can implement massive connections, deep coverage, and terminal power saving by using, for example, a narrowband (narrowband, NB) technology.

In addition, the terminal device may further include a sensor like an intelligent printer, a train detector, or a gas station, which mainly functions to collect data (a part of terminal devices), receive control information and downlink data from a network device, send an electromagnetic wave, and transmit uplink data to the network device.

Terms in this application are first briefly described, to better understand the communication method provided in embodiments of this application.

### (1) Cell, serving cell, and candidate cell

The cell (cell) is described by a higher layer from a perspective of resource management or mobility management or a service unit. Coverage of each network device may be divided into one or more cells. In addition, each cell may correspond to one or more frequencies, in other words, each cell may be considered as an area formed by coverage of the one or more frequencies. It should be noted that the cell may be an area within coverage of a wireless network of a network device.

The serving cell is a cell on which a terminal device currently camps. In some mobility management technologies, a network device may provide one or more candidate cells for a terminal device. As the terminal device moves, the terminal device may be handed over to a candidate cell, the cell also becomes a target cell, and the target cell becomes a serving cell of the terminal device.

### (2) Special cell (special cell, SpCell) and secondary cell (secondary cell, SCell)

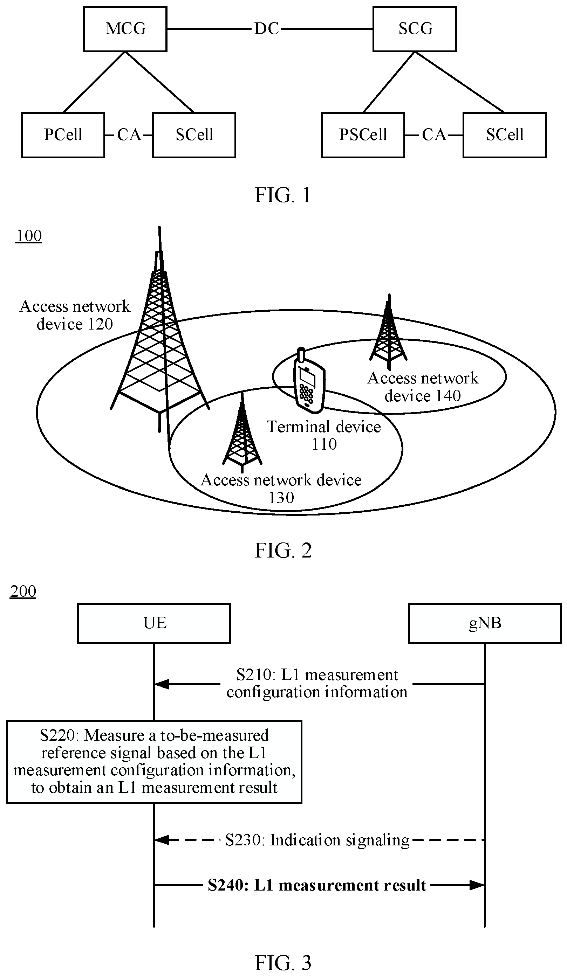

FIG. 1 is a diagram of a relationship between an SpCell and an SCell according to an embodiment of this application. The following describes concepts of the SpCell and the SCell in detail with reference to FIG. 1.

A terminal device may communicate with one or more cells. When the terminal device communicates with a single cell, the cell may be referred to as an SpCell. When the terminal device communicates with a plurality of cells, there are two manners: The terminal device communicates with the plurality of cells in a dual connectivity (dual connectivity, DC) manner, or the terminal device communicates with the plurality of cells in a carrier aggregation (carrier aggregation, CA) manner. When the terminal device communicates with the plurality of cells in the CA manner, the plurality of cells are classified into a primary cell (primary cell, PCell) and an SCell. The PCell may be referred to as an SpCell. In the CA scenario, the SpCell may be the PCell.

When the terminal device communicates with the plurality of cells in the DC manner, as shown in FIG. 1, there are a master cell group (master cell group, MCG) and a secondary cell group (secondary cell group, SCG). The MCG may include a plurality of cells, where a cell used to initiate initial access is referred to as a PCell. It may also be understood that a cell in the plurality of cells that performs a general command is referred to as a PCell, and the other cells are referred to as SCells. The PCell and the SCells in the MCG are combined by using a CA technology. Similarly, the SCG may also include a plurality of cells, where a cell used to initiate initial access is referred to as a primary secondary cell (primary secondary cell, PSCell). It may also be understood that a cell in the plurality of cells that performs a general command is referred to as a PSCell, and the other cells are referred to as SCells. The PSCell and the SCells in the SCG are combined by using the CA technology. The SpCell includes the PCell in the MCG and the PSCell in the SCG. It should be understood that when the terminal device communicates with more than two cell groups, a concept of SpCell may be correspondingly extended. In the DC scenario, the SpCell includes the PCell and the PSCell.

### (3) Reference signal

The reference signal may be used for channel measurement, channel estimation, beam quality monitoring, or the like. For example, the reference signal in embodiments of this application may include a channel state information reference signal (channel state information reference signal, CSI-RS) and a synchronization signal and physical broadcast channel block (synchronization signal and physical broadcast channel block, SSB).

To facilitate understanding of embodiments of this application, a communication system applicable to embodiments of this application is described in detail below with reference to FIG. 2. FIG. 2 is a diagram of a network architecture of a communication system 100 according to an embodiment of this application. As shown in FIG. 2, the communication system 100 may include network devices and a terminal device. The terminal device is located in coverage of one or more cells (carriers) provided by the network devices, and there may be one or more cells serving the terminal device. When there are a plurality of cells that serve the terminal device, the terminal device may work in a CA, DC, or coordinated multiple points transmission/reception (coordinated multiple points transmission/reception, CoMP) manner, and at least one cell may provide the terminal device with radio resources corresponding to more than one transmission parameter set.

For example, as shown in FIG. 2, the terminal device 110 is located in a cell of the network device 120, a cell of the network device 130, and a cell of the network device 140. The network device 120 may be a macro base station (for example, a macro eNB), and the network device 130 and the network device 140 may be micro base stations (for example, small eNBs). It should be understood that FIG. 2 is merely a diagram. The communication system 100 may further include other network devices such as a core network device, a wireless relay device, and a wireless backhaul device, which are not shown in FIG. 2.

A quantity of network devices, a quantity of terminal devices, a quantity of core network devices, and a quantity of another network device included in the communication system are not limited in embodiments of this application.

The network device in embodiments of this application may correspond to different devices in communication systems of different types or standards, for example, corresponds to a network device (for example, a gNB or an ng-eNB) in 5G in a 5G system, and corresponds to a network device (for example, an eNB or an en-gNB) in 4G in a 4G system.

The network device and the terminal device in embodiments of this application may be deployed on land, including indoor devices, outdoor devices, handheld devices, or vehicle-mounted devices; may be deployed on water; or may be deployed on an airplane, a balloon, or an artificial satellite in the air. Application scenarios of the network device and the terminal device are not limited in embodiments of this application.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of a communication network architecture and the emergence of new service scenarios, the technical solutions provided in embodiments of this application are also applicable to similar technical problems.

In a mobile communication system, a terminal device (for example, UE) may report a reference signal measurement result of a current serving cell and a neighboring cell to a network device (for example, a gNB). The measurement result reported by the UE is extremely important for the base station to manage the UE. For example, when the measurement result indicates that channel quality of a current serving cell is good, the gNB may schedule more data packets and perform scheduling policy update. When the measurement result indicates that channel quality of a neighboring cell is better than that of the current serving cell, the gNB may indicate the UE to perform a mobility management process like cell handover or beam switching.

However, when the UE reports the measurement result, an uplink transmission resource is also occupied. How to efficiently perform measurement reporting is worth studying.

FIG. 3 is a schematic flowchart of a method 200 for reporting a measurement result. The method 200 mainly relates to an L1 measurement reporting mechanism, where L1 refers to a physical layer, and a process of reporting an L1 measurement result is mainly completed by the physical layer.

S210: A gNB sends L1 measurement configuration information to UE. Correspondingly, the UE receives the L1 measurement configuration information.

The L1 measurement configuration information includes at least one of the following: a to-be-measured reference signal set, a reporting manner, a report measured quantity, or an uplink resource used for reporting.

The to-be-measured reference signal set may include a reference signal of a serving cell and/or a reference signal of a neighboring cell.

The reporting manner may include periodic reporting, aperiodic reporting, or semi-persistent reporting. The periodic reporting means that the UE performs periodic reporting based on a periodicity configured by the gNB. The aperiodic reporting means that the gNB sends indication signaling to trigger the UE to perform reporting once. The semi-persistent reporting means that the gNB sends indication signaling to trigger the UE to start periodic reporting.

The report measured quantity may include at least one of the following: a reference signal received power (reference signal received power, RSRP), reference signal received quality (reference signal received quality, RSRQ), a signal to interference plus noise ratio (signal to interference plus noise ratio, SINR), a precoding matrix indication (precoding matrix indication, PMI), channel quality information (channel quality information, CQI), or a rank indication (rank indication, RI). It should be understood that the measured quantity may be a cell-level measurement result, or may be a beam-level (or reference signal-level) measurement result. One cell may have a plurality of beams (or a plurality of reference signals). The cell-level measurement result may include measurement results of different cells, for example, an average RSRP value of a cell 1 and an average RSRP value of a cell 2. The beam-level (or reference signal-level) measurement result may include measurement results of different beams (or different reference signals), for example, an RSRP value of a beam 1 (or an SSB 1) and an RSRP value of a beam 2 (or an SSB 2).

The uplink resource used for reporting includes a physical uplink control channel (physical uplink control channel, PUCCH) resource and/or a physical uplink shared channel (physical uplink shared channel, PUSCH) resource. Specifically, the gNB may indicate the UE to include the measurement result on the PUCCH or the PUSCH for reporting.

S220: The UE measures a to-be-measured reference signal based on the L1 measurement configuration information, to obtain the L1 measurement result.

In this step, the UE may measure the to-be-measured reference signal based on the L1 measurement configuration information configured by the gNB, to obtain the L1 measurement result. Both the to-be-measured reference signal and the measured quantity that needs to be measured are configured by the gNB. In other words, the UE may learn of the to-be-measured reference signal set and the report measured quantity from the L1 measurement configuration information.

S230: The gNB sends indication signaling to the UE. Correspondingly, the UE receives the indication signaling sent by the gNB.

It should be understood that this step is an optional step.

When the gNB indicates the UE to use the aperiodic reporting manner or the semi-persistent reporting manner, the gNB needs to send a piece of indication signaling to the UE. The indication signaling indicates whether the UE uses the aperiodic reporting manner or the semi-persistent reporting manner. When the gNB indicates the UE to use the periodic reporting manner, the gNB may not need to send the indication signaling to the UE.

S240: The UE reports the L1 measurement result based on the L1 measurement configuration information. Correspondingly, the gNB receives the L1 measurement result.

In this step, the UE may report the L1 measurement result based on the L1 measurement configuration information configured by the gNB. In other words, the UE may obtain, from the L1 measurement configuration information, the reporting manner and the used uplink resource for reporting. When reporting the L1 measurement result, the UE may report the L1 measurement result based on the reporting manner and the used uplink resource that are configured by the gNB.

For example, the L1 measurement result may be reported to the gNB via L1 uplink control information (uplink control information, UCI), where the UCI may be carried on the PUCCH or the PUSCH. The measurement result is referred to as an L1 measurement result, that is, a measurement result obtained by measuring the received reference signal by the physical layer (layer L1) of the UE.

In the foregoing L1 measurement reporting mechanism, the UE uses a large quantity of uplink resources for reporting, and power consumption of the UE is high. For example, when the periodic reporting manner is configured, the gNB needs to provide a periodic PUCCH resource. Even if a channel condition of the UE does not change greatly, the UE needs to continuously occupy the periodic PUCCH resource and continuously perform reporting. This wastes an uplink resource and consumes UE power.

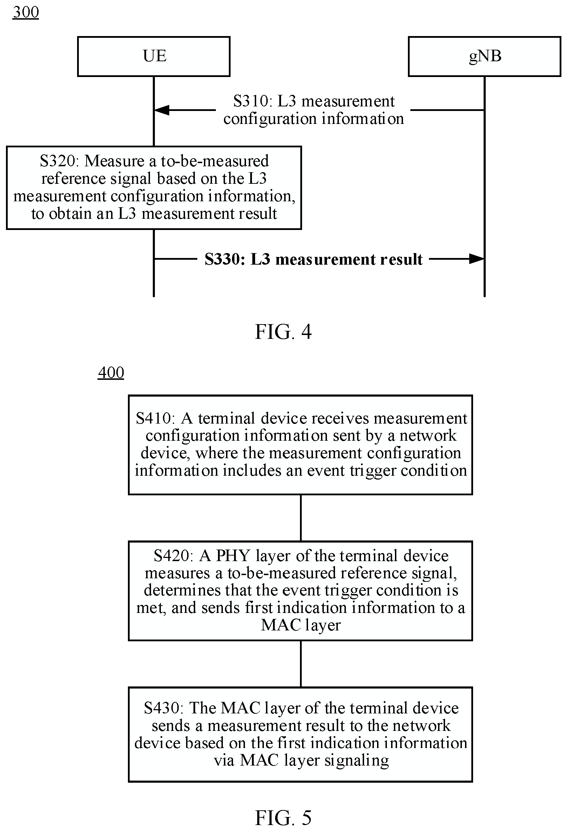

FIG. 4 is a schematic flowchart of another method 300 for reporting a measurement result. The method 300 mainly relates to an L3 measurement reporting mechanism, where L3 refers to a radio resource control (radio resource control, RRC) layer, and a process of reporting an L3 measurement result needs to be completed by the RRC layer.

S310: A gNB provides L3 measurement configuration information for UE. Correspondingly, the UE receives the L3 measurement configuration information.

The L3 measurement configuration information may include at least one of the following: a to-be-measured frequency, a to-be-measured reference signal set, a reporting manner, or a report measured quantity.

The to-be-measured frequency is to-be-measured frequency domain location information. The to-be-measured reference signal set includes a reference signal of a serving cell and/or a reference signal of a neighboring cell.

The reporting manner includes a periodic reporting manner and an event triggered reporting manner. The periodic reporting means that the UE performs periodic reporting based on a periodicity configured by the gNB. The event triggered reporting means that the gNB may configure some events for the UE, and the UE performs reporting after determining that the events are triggered (or conditions of the events are met). The events configured by the gNB for the UE may include the following events.

Event A1 (event A1): A measurement result of a serving cell is greater than a preset threshold.

Event A2 (event A2): A measurement result of a serving cell is less than a preset threshold.

Event A3 (event A3): A measurement result of a neighboring cell is greater than a measurement result of a serving cell (or a special cell SpCell) by a preset threshold.

Event A4 (event A4): A measurement result of a neighboring cell is greater than a preset threshold.

Event A5 (event A5): A measurement result of a serving cell is less than a first threshold, and a measurement result of a neighboring cell is greater than a second threshold.

Event A6 (event A6): A measurement result of a neighboring cell is greater than a measurement result of a secondary cell by a preset threshold.

For example, there is an A3 event: Channel quality of a neighboring cell is greater than channel quality of a current serving cell by a preset threshold. For example, there is an A5 event: Channel quality of a current serving cell is less than a first threshold, and channel quality of a neighboring cell is greater than a second threshold.

It should be noted that a measurement result that triggers the foregoing event may be specified by the gNB. In other words, the gNB specifies whether a condition for determining, by the UE, that an event is triggered is an RSRP measurement result, an RSRQ measurement result, or an SINR measurement result.

The report measured quantity may include at least one of the following: an RSRP, RSRQ, an SINR, a PMI, CQI, or an RI.

S320: The UE measures a to-be-measured reference signal based on the L3 measurement configuration information, to obtain the L3 measurement result.

In this step, the UE may measure the to-be-measured reference signal based on the L3 measurement configuration information configured by the gNB, to obtain the L3 measurement result. The to-be-measured frequency, the to-be-measured reference signal, and the measured quantity that needs to be measured are all configured by the gNB. In other words, the UE may learn of the to-be-measured frequency, the to-be-measured reference signal set, and the report measured quantity from the L3 measurement configuration information.

S330: The UE reports the L3 measurement result based on the L3 measurement configuration information. Correspondingly, the gNB receives the L3 measurement result.

In this step, the UE may report the L3 measurement result based on the L3 measurement configuration information configured by the gNB. In other words, the UE may obtain, from the L3 measurement configuration information, the reporting manner. When reporting the L3 measurement result, the UE may report the L3 measurement result based on the reporting manner configured by the gNB.

It should be understood that the L3 measurement result is reported to the gNB via an RRC message. Specifically, the L3 measurement result of the UE needs to be filtered by the RRC layer and reported via the RRC message.

In the foregoing L3 measurement reporting mechanism, although the event triggered reporting mechanism is used to reduce uplink resource usage for reporting and reduce power consumption of the UE, an L3 reporting process is slow, an RRC processing process is slow, and an RRC message assembly and sending process is also slow. As a result, the measurement result arrives at the gNB late, compromising timeliness of reporting.

For the foregoing L1 and L3 measurement reporting mechanisms, this application provides a communication method and a communication apparatus. An event triggered reporting mechanism is designed, so that uplink resource occupation of UE and reporting power consumption of the UE are reduced while prompt reporting of measurement results is provided.

FIG. 5 is a schematic flowchart of a communication method 400 according to an embodiment of this application. It should be understood that the communication method 400 may be applied to a terminal device. The terminal device herein may be the terminal device, or may be a processor, a module, a chip, a chip system, or the like that is in the terminal device and that implements the method. This is not limited in this application.

S410: The terminal device receives measurement configuration information sent by a network device. Correspondingly, the network device sends the measurement configuration information to the terminal device.

The measurement configuration information may include an event trigger condition, and the event trigger condition may be understood as a preset condition that a measurement result of a measured quantity needs to meet.

In some embodiments, the event trigger condition may include a cell-level event trigger condition, a beam-level event trigger condition (namely, a reference signal-level event trigger condition), and a reference signal set-level event trigger condition.

Specifically, the cell-level event trigger condition may include any one of the following: a measurement result of a serving cell is greater than a preset threshold; a measurement result of a serving cell is less than a preset threshold; a measurement result of a neighboring cell is greater than a measurement result of a serving cell/special cell by a preset threshold; a measurement result of a neighboring cell is greater than a preset threshold; a measurement result of a serving cell is less than a first threshold, and a measurement result of a neighboring cell is greater than a threshold; or a measurement result of a neighboring cell is greater than a measurement result of a secondary cell by a preset threshold.

The beam-level event trigger condition may include any one of the following: a measurement result of a beam being used by a serving cell is greater than a preset threshold; a measurement result of a beam being used by a serving cell is less than a preset threshold; a measurement result of a beam of a neighboring cell is greater than a measurement result of a beam being used by a serving cell/special cell by a preset threshold; a measurement result of a beam of a neighboring cell is greater than a preset threshold; a measurement result of a beam being used by a serving cell is less than a third threshold, and a measurement result of a beam of a neighboring cell is greater than a fourth threshold; or a measurement result of a beam of a neighboring cell is greater than a measurement result of a beam of a secondary cell by a preset threshold.

The reference signal set-level event trigger condition may include any one of the following: a measurement result of a reference signal set corresponding to a serving cell is greater than a preset threshold; a measurement result of a reference signal set corresponding to a serving cell is less than a preset threshold; a measurement result of a reference signal set corresponding to a neighboring cell is greater than a measurement result of a reference signal set corresponding to a serving cell/special cell by a preset threshold; a measurement result of a reference signal set corresponding to a neighboring cell is greater than a preset threshold; a measurement result of a reference signal set corresponding to a serving cell is less than a fifth threshold, and a measurement result of a reference signal set corresponding to a neighboring cell is greater than a sixth threshold; or a measurement result of a reference signal set corresponding to a neighboring cell is greater than a measurement result of a reference signal set corresponding to a secondary cell by a preset threshold.

In some embodiments, the network device may preconfigure different events for the terminal device, or some events are predefined in a protocol. The events may include a cell-level triggered event (namely, an event A), a beam-level triggered event (namely, an event X), and a reference signal set-level triggered event (namely, an event Y).

For the cell-level triggered event (event A), refer to S310. The event A may specifically include an event A1 to an event A6. For example, when an RSRP of each beam in a measurement result of a beam of a serving cell is less than a preset threshold, the terminal device reports the measurement result to the network device.

The beam-level triggered event (event X) may include the following events.

Event X1 (event X1): A measurement result of a beam being used by a serving cell is greater than a preset threshold.

Event X2 (event X2): A measurement result of a beam being used by a serving cell is less than a preset threshold.

Event X3 (event X3): A measurement result of a beam of a neighboring cell is greater than a measurement result of a beam being used by a serving cell (or a special cell SpCell) by a preset threshold.

Event X4 (event X4): A measurement result of a beam of a neighboring cell is greater than a preset threshold.

Event X5 (event X5): A measurement result of a beam being used by a serving cell is less than a third threshold, and a measurement result of a beam of a neighboring cell is greater than a fourth threshold.

Event X6 (event X6): A measurement result of a beam of a neighboring cell is greater than a measurement result of a beam of a current secondary cell by a preset value.

The reference signal set-level triggered event (event Y) may include the following events.

Event Y1 (event Y1): A measurement result of a reference signal set corresponding to a serving cell is greater than a preset threshold.

Event Y2 (event Y2): A measurement result of a reference signal set corresponding to a serving cell is less than a preset threshold.

Event Y3 (event Y3): A measurement result of a reference signal set corresponding to a neighboring cell is greater than a measurement result of a reference signal set corresponding to a serving cell (or a special cell SpCell) by a preset threshold.

Event Y4 (event Y4): A measurement result of a reference signal set corresponding to a neighboring cell is greater than a preset threshold.

Event Y5 (event Y5): A measurement result of a reference signal set corresponding to a serving cell is less than a fifth threshold, and a measurement result of a reference signal set corresponding to a neighboring cell is greater than a sixth threshold.

Event Y6 (event Y6): A measurement result of a reference signal set corresponding to a neighboring cell is greater than a measurement result of a reference signal set corresponding to a current secondary cell by a preset threshold.

It should be understood that there may be other event content. Specific event content is not limited in this application, and the foregoing event content is merely an example for description.

It should be noted that values of the preset threshold, the first threshold, the second threshold, the third threshold, and the fourth threshold are not limited in embodiments of this application. It should be understood that the preset threshold may be greater than or equal to 0. In some embodiments, when the preset threshold is 0, it may be considered that a cell-level measurement result of a neighboring cell/candidate cell is greater than a cell-level measurement result of a current serving cell. In some embodiments, when the preset threshold is 0, it may be considered that a measurement result of a beam of a neighboring cell is greater than a measurement result of a beam being used by a serving cell/special cell. In some embodiments, when the preset threshold is 0, it may be considered that a measurement result of a reference signal set corresponding to a neighboring cell is greater than a measurement result of a reference signal set corresponding to a serving cell/special cell.

It should be noted that, the network device specifies a measurement result of which measured quantity the measurement result is, for example, an RSRP measurement result, an RSRQ measurement result, or an SINR measurement result. For example, when an RSRP of each beam in a measurement result of a beam of a serving cell is less than a preset threshold, the terminal device reports the measurement result corresponding to the reference signal to the network device.

It may be understood that the event trigger condition implicitly includes a triggered event granularity and a triggered event type.

The triggered event granularity may include any one of the following: a UE-level granularity, a cell-level granularity, a reference signal set-level granularity, or a beam-level granularity/reference signal-level granularity.

UE-level granularity: Unified events are used for UE. Specifically, the network device allocates an event (for example, an event A1) to the UE. In other words, regardless of whether different reference signal sets or different cells are evaluated, when a measurement result (for example, an RSRP measurement result) of a serving cell is greater than a preset threshold, the UE reports the measurement result. The RSRP measurement result may be an average value of RSRP measurement results of a plurality of reference signals of the serving cell.

Cell-level granularity: Different events may be configured for different neighboring cells or candidate cells. Specifically, for a candidate cell 1, the network device allocates an event (for example, an event 1), and for a candidate cell 2, the network device allocates another event (for example, an event 2). The event 1 and the event 2 may correspond to different thresholds of the event A1. For example, the event 1 is that the measurement result of the serving cell is greater than a threshold x, and the event 2 is that the measurement result of the serving cell is greater than a threshold y.

Reference signal set-level granularity: Different events may be configured for different to-be-measured reference signal sets. Specifically, when the UE evaluates whether reference signals in different sets meet the trigger condition, different reference signal sets correspond to different events. For example, for a reference signal set 1, reporting is performed when a measurement result of a neighboring cell is greater than a measurement result of a serving cell by x; and for a reference signal set 2, reporting is performed when signal quality of a neighboring cell is greater than signal quality of a serving cell by y, so that more refined control can be implemented.

Beam-level granularity/Reference signal-level granularity: Different events may be configured for different to-be-measured beams/to-be-measured reference signals. Specifically, the network device may allocate different events for different to-be-measured beams/to-be-measured reference signals. For example, for a beam 1/reference signal 1, reporting is performed when a measurement result of a neighboring cell is greater than a measurement result of a serving cell by x; and for a beam 2/reference signal 2, reporting is performed when signal quality of a neighboring cell is greater than signal quality of a serving cell by y, so that more refined control can be implemented.

The triggered event type may include any one of the following: an event of a cell-level measurement result, an event of a beam-level measurement result, or an event of a set-level measurement result.

Event of a cell-level measurement result: For example, a cell-level measurement result of a neighboring cell/candidate cell is greater than a cell-level measurement result of a current serving cell, or is greater than the cell-level measurement result of the current serving cell by a preset threshold. For example, the cell-level measurement result may be an average value of measurement results of a plurality of reference signals of the cell.

Event of a beam-level measurement result: For example, a beam-level measurement result of a neighboring cell/candidate cell is greater than a beam-level measurement result of a beam being used by a current serving cell, or is greater than the beam-level measurement result of the beam being used by the current serving cell by a preset threshold. The beam-level measurement result is generally a measurement result of a reference signal, that is, one reference signal corresponds to one beam direction.

Event of a set-level measurement result: For example, an average value of measurement results of a plurality of reference signals in a reference signal set is greater than a measurement result of a beam/reference signal being used by a current serving cell, or is greater than the measurement result of the beam/reference signal being used by the current serving cell by a preset threshold. For another example, a measurement result of a strongest reference signal in a reference signal set is greater than a measurement result of a beam/reference signal being used by a current serving cell, or is greater than the measurement result of the beam/reference signal being used by the current serving cell by a preset threshold.

Optionally, the measurement configuration information may further include a to-be-measured reference signal, a to-be-measured frequency, and a to-be-measured quantity (report quantity). The to-be-measured frequency is to-be-measured frequency domain location information. The to-be-measured quantity may include at least one of the following: an RSRP, RSRQ, an SINR, a PMI, CQI, or an RI.

The to-be-measured reference signal includes a reference signal of a serving cell and/or a reference signal of a neighboring cell. In a mobility management scenario, a neighboring cell may also be referred to as a candidate cell. The UE may be handed over to the candidate cell later, that is, the candidate cell is considered as a target cell of handover, and the target cell becomes a new serving cell of the UE. The to-be-measured reference signal may be an SSB, a CSI-RS, or another type of reference signal, and different reference signals correspond to different beam directions.

It should be understood that the to-be-measured reference signal may be one or more reference signal sets, and the reference signal set includes a reference signal of a serving cell and/or a reference signal of a neighboring cell. It should be understood that both the reference signal of the serving cell and the reference signal of the neighboring cell may be distinguished by using reference signal identifiers (for example, reference signal IDs). In other words, the measurement configuration information may include one or more reference signal sets, and each reference signal set may include an identifier of a reference signal of a serving cell and/or an identifier of a reference signal of a neighboring cell.

Optionally, the measurement configuration information may further include a preset rule, and the terminal device may select, based on the preset rule, a measurement result for reporting. The preset rule may include at least one of the following: selecting the measurement result of a candidate cell based on signal strength; selecting the measurement result of a reference signal set based on signal strength; selecting the measurement result of a reference signal based on signal strength; selecting the measurement result based on a measurement result of a special cell; or selecting the measurement result based on a measurement result of a reference signal received power RSRP.

It should be noted that the foregoing event content (including the event granularity and the event type) may be generated by a gNB that manages a current serving cell (namely, a serving gNB), or may be generated by a gNB that manages a neighboring cell/candidate cell (namely, a neighboring gNB or a candidate gNB). If the event content is generated by the neighboring gNB/candidate gNB, the neighboring gNB/candidate gNB sends the event content to the serving gNB, and the serving gNB sends the event content to the UE.

S420: A PHY layer of the terminal device measures the to-be-measured reference signal, determines that the event trigger condition is met, and sends first indication information to a MAC layer.

Specifically, when the physical PHY layer of the terminal device measures the to-be-measured reference signal, and determines that a first measurement result of the to-be-measured reference signal meets the event trigger condition, the PHY layer sends the first indication information to the MAC layer. The first indication information may indicate that an event is in a triggered state, that is, the first measurement result of the to-be-measured reference signal meets the event trigger condition. Correspondingly, after the MAC layer receives the first indication information, the MAC layer is triggered to perform reporting, in other words, enters a reporting triggered state. Then, the MAC layer may send a second measurement result to the network device.

It should be noted that the first measurement result and the second measurement result may be the same, may be different, or may be partially the same. The first measurement result is used to determine whether the event trigger condition is met, and the second measurement result is a measurement result that the network device indicates the terminal device to report. The first measurement result is a measurement result corresponding to a first measured quantity, and the second measurement result is a measurement result corresponding to a second measured quantity. It should be understood that both the first measured quantity and the second measured quantity are specified by the network device. Specifically, the terminal device may obtain the first measured quantity and the second measured quantity from the measurement configuration information. The first measured quantity may include at least one of the following: a reference signal received power RSRP, reference signal received quality RSRQ, or a signal to interference plus noise ratio SINR. The second measured quantity may include at least one of the following: a reference signal received power RSRP, reference signal received quality RSRQ, a signal to interference plus noise ratio SINR, a precoding matrix indication PMI, channel quality information CQI, or a rank indication RI.

For example, the first measurement result is an RSRQ measurement result, and the reported second measurement result is also an RSRQ measurement result. For another example, the first measurement result is an RSRP measurement result, but the reported second measurement result is a PMI measurement result. For another example, the first measurement result is an RSRP measurement result, and the reported second measurement result includes an RSRP measurement result, a PMI measurement result, a CQI measurement result, and an RI measurement result.

It should be understood that after the terminal device receives the measurement configuration information from the network device, the PHY layer of the terminal device may measure the to-be-measured reference signal (for example, a reference signal of a serving cell and/or a candidate cell). The reference signal may be an SSB, a CSI-RS, or another type of reference signal, and different reference signals correspond to different beam directions. The PHY layer of the terminal device measures different reference signals of the serving cell and/or the candidate cell, to obtain a beam-level measurement result.

For example, reference signals of the serving cell are an SSB 1, an SSB 2, a CSI-RS 1, and a CSI-RS 2, reference signals of a first candidate cell are an SSB 1, an SSB 2, a CSI-RS 1, and a CSI-RS 2, and reference signals of a second candidate cell are an SSB 1, an SSB 2, a CSI-RS 1, and a CSI-RS 2, where the first candidate cell and the second candidate cell are any cells in candidate cells. The PHY layer of the terminal device needs to separately measure the reference signals, to obtain 12 beam-level measurement results.

The measurement result includes a beam-level measurement result, a reference signal set-level measurement result, and a cell-level measurement result. After measuring the to-be-measured reference signal to obtain the beam-level measurement result, the terminal device may further determine the reference signal set-level measurement result and the cell-level measurement result, and send the measurement results to the network device.

It should be understood that, in embodiments of this application, to facilitate distinguishing between measurement results of different granularities, a beam measurement result, a reference signal set measurement result, and a cell measurement result are respectively denoted as a beam-level measurement result, a reference signal set-level measurement result, and a cell-level measurement result. When a measurement result is separately described, the measurement result may include at least one of a beam-level measurement result, a reference signal set-level measurement result, and a cell-level measurement result. The beam-level measurement result may also be referred to as a reference signal-level measurement result.

For a method for calculating a cell-level measurement result, refer to a method for calculating a cell-level measurement result in a conventional technology. The following uses a first reference signal set as an example to describe in detail a method for calculating a reference signal set-level measurement result.

The first reference signal set may include a plurality of reference signals. A measurement result corresponding to the first reference signal set is determined based on a beam measurement result corresponding to the plurality of reference signals in the first reference signal set. The terminal device may determine the measurement result of the first reference signal set based on the beam-level measurement result. For example, the PHY layer of the terminal device may measure the plurality of reference signals (namely, a plurality of beams) in the first reference signal set, to determine a measurement result of each beam, and then may determine the measurement result of the first reference signal set based on the measurement result of each beam.

S430: The MAC layer of the terminal device sends the measurement result to the network device based on the first indication information via MAC layer signaling. Correspondingly, the network device receives the measurement result.

In some embodiments, the MAC layer receives the first indication information, to trigger the MAC layer to perform reporting; and sends the measurement result to the network device via the MAC layer signaling. Specifically, the PHY layer may measure the to-be-measured reference signal. If it is determined that the measurement result obtained through the measurement meets the event trigger condition, the PHY layer may send the first indication information to the MAC layer, to trigger the MAC layer to perform reporting. Then, the terminal device may send the measurement result via the MAC layer signaling. In other words, the MAC layer may enter the reporting triggered state. When the MAC layer is in the reporting triggered state, the measurement result may be sent via the MAC layer signaling.

In some embodiments, a periodic reporting timer is started when the MAC layer receives the first indication information; and when the periodic reporting timer expires, the MAC layer is triggered to perform reporting, the periodic reporting timer is started, and the measurement result is sent via the MAC layer signaling. Specifically, after the MAC layer receives the first indication information sent by the PHY layer, the terminal device starts the periodic reporting timer. When the periodic reporting timer expires, a reporting process of the MAC layer is triggered again. After the terminal device sends the measurement result, if the PHY layer determines that an event is still in a triggered state, or the MAC layer receives the first indication information but does not receive second indication information below, the terminal device restarts the periodic reporting timer. In this way, repeated sending of the first indication information for a plurality of times can be avoided, and inter-layer interaction complexity can be reduced.

In some embodiments, after the measurement result is sent to the network device via the MAC layer signaling, the reporting triggering for the MAC layer is canceled. Specifically, if the MAC layer reports the measurement result via the MAC layer signaling, the reporting triggering for the MAC layer may be canceled, that is, the reporting triggered state of the MAC layer may be canceled, to avoid a case in which reporting is continuously performed by using an uplink resource because the MAC layer is always in the triggered state. If the MAC layer further needs to report the measurement result, the MAC layer needs to receive the first indication information again or wait for the periodic reporting timer to expire again.

Optionally, when determining that the measurement result (for example, the foregoing first measurement result) of the to-be-measured reference signal still meets the event trigger condition, the PHY layer of the terminal device continues to send the first indication information to the MAC layer, to trigger the MAC layer to perform reporting. Then, the measurement result is sent to the network device via the MAC layer signaling.

In some embodiments, the periodic reporting timer is started when the MAC layer receives the first indication information; the PHY layer sends second indication information to the MAC layer when determining that the event trigger condition is not met; and the MAC layer stops the periodic reporting timer based on the second indication information. Specifically, after receiving the first indication information, the MAC layer of the terminal device may start the periodic reporting timer. If the PHY layer of the terminal device determines that the measurement result (for example, the foregoing first measurement result) of the to-be-measured reference signal does not meet the event trigger condition, the PHY layer sends the second indication information to the MAC layer. The second indication information may indicate that an event is no longer in the triggered state, in other words, that the first measurement result of the to-be-measured reference signal does not meet the event trigger condition. Then, the MAC layer may stop the periodic reporting timer based on the second indication information.

Optionally, after receiving the second indication information, the MAC layer may trigger a last reporting process again, that is, report a measurement result to the network device again. Further, optionally, the measurement result may indicate that the event trigger condition is no longer met subsequently.

Optionally, the PHY layer of the terminal device determines, at intervals of a preset time period, whether the measurement result (for example, the foregoing first measurement result) meets the event trigger condition, or the PHY layer of the terminal device determines, in each preset time period, whether the measurement result (for example, the foregoing first measurement result) meets the event trigger condition. For example, the PHY layer of the terminal device may periodically determine (for example, perform determining every 5 ms) whether an event is triggered; or the PHY layer of the terminal device determines, in each preset time period (for example, perform determining once in each time period of 5 ms), whether an event is triggered.

In some embodiments, the MAC layer signaling may include a media access control control element MAC CE, or other control signaling, for example, MAC layer control signaling that may appear in a future network system.

It should be understood that when there is an available uplink resource, the terminal device may generate a MAC CE, and the terminal device may send the MAC CE to the network device via the MAC layer signaling, where the MAC CE carries a measurement result (for example, the foregoing second measurement result). Further, after the terminal device sends the MAC CE, the MAC layer may cancel the reporting triggering. If the measurement result needs to be reported subsequently, the MAC layer needs to wait for triggering of a next reporting process, for example, the periodic reporting timer expires, or the first indication information of the PHY layer is received.

The MAC CE may include at least one of the following: an identifier of a reference signal set, an identifier of a serving cell, an identifier of a candidate cell, an identifier of a secondary cell, an identifier of a reference signal, a to-be-measured quantity, or a measurement result corresponding to a to-be-measured quantity. For example, the MAC CE includes an RSRP measurement result of a reference signal 1 of a serving cell 1. In some possible solutions, the identifier of the serving cell may be corresponding to an identifier of a special cell.

In an example, a format of the MAC CE may be shown in Table 1. The MAC CE may include an identifier of a candidate cell/serving cell/reference signal set (namely, a Candidate/Serving/Reference Signal Set ID), an identifier of a reference signal of a special cell (namely, an RS ID of the SpCell), and an L1 measurement result of the special cell (namely, an L1 result of SpCell). Optionally, the MAC CE may further include an identifier of a secondary cell (namely, an SCell ID), an identifier of a reference signal of the special cell (namely, an RS ID of the SCell), and a measurement result of the secondary cell (L1 result of SCell).

The L1 result may include a to-be-measured quantity and a measurement result corresponding to the to-be-measured quantity. The to-be-measured quantity may be specifically understood as a type of a report measured quantity (report quantity type), for example, an RSRP, RSRQ, an SINR, or another type of measured quantity. The measurement result corresponding to the to-be-measured quantity is a measurement result (value of the report) corresponding to the type of the measured quantity.

As described above, in a non-carrier aggregation and non-dual-connectivity scenario, the SpCell is a unique candidate cell. In a carrier aggregation scenario, the SpCell is a primary cell PCell. In a dual-connectivity scenario, the SpCell includes a primary cell PCell and a primary secondary cell PSCell.

**Table 1**

| | |
|---|---|
| Candidate/Serving/Reference Signal Set ID | |
| RS ID of the SpCell | |
| L1 result of SpCell | |
| SCell ID | |
| RS ID of the SCell | |
| L1 result of SCell | |
| ... | ... |

In another example, a format of the MAC CE may be shown in Table 2. The MAC CE may include Ti, an RS ID of the SpCell, and an L1 result of SpCell. Optionally, the MAC CE may further include an SCell ID, an RS ID of the SCell, and an L1 result of SCell.

Ti refers to an i^{th} candidate cell (or a candidate cell whose identifier is i) or an i^{th} reference signal set (or a reference signal set whose identifier is i). When Ti is 1, it indicates that the candidate cell or the reference signal set meets the event trigger condition, or may indicate that an event corresponding to the candidate cell or the reference signal set is triggered. When Ti is 0, it indicates that the candidate cell or the reference signal set does not meet the event trigger condition, or may indicate that the event corresponding to the candidate cell or the reference signal set is not triggered. For other parameters, refer to the descriptions about Table 1.

**Table 2**

| | | | | | | | |
|---|---|---|---|---|---|---|---|
| T1 | T2 | T3 | T4 | T5 | T6 | T7 | T8 |
| RS ID of the SpCell | | | | | | | |
| L1 result of SpCell | | | | | | | |
| SCell ID | | | | | | | |
| RS ID of the SCell | | | | | | | |
| L1 result of SCell | | | | | | | |
| ... | | | | ... | | | |

In some embodiments, the PHY layer measures a first reference signal and a second reference signal, determines that both the first reference signal and the second reference signal meet the event trigger condition, and sends the first indication information to the MAC layer. The MAC layer sends, based on the first indication information and a preset rule via first MAC layer signaling, a measurement result corresponding to the first reference signal to the network device. In addition, a measurement result corresponding to the second reference signal may be further sent to the network device via second MAC layer signaling.

The preset rule may include at least one of the following: selecting the measurement result of a candidate cell based on signal strength; selecting the measurement result of a reference signal set based on signal strength; selecting the measurement result of a reference signal based on signal strength; selecting the measurement result based on a measurement result of a special cell; or selecting the measurement result based on a measurement result of a reference signal received power RSRP. The measurement result may include a cell-level measurement result, a beam-level measurement result, and a reference signal set-level measurement result.

For example, when the terminal device has an available uplink resource, the terminal device generates a MAC CE for sending the measurement result. When the uplink resource may be insufficient for sending a complete MAC CE, for example, an uplink resource can be used for sending content of five bytes, but the MAC CE generated by the terminal device for reporting the measurement result has 10 bytes, the terminal device needs to perform truncation and reporting on the MAC CE. When the terminal device performs truncation and reporting, for example, the terminal device may select, according to the following rules, some content for reporting.

Rule 1: Select a measurement result of a candidate cell or a reference signal set based on signal strength.

For example, if a plurality of events are triggered, the terminal device selects a measurement result of a candidate cell or a reference signal set with strongest signal strength in the triggered events, and includes the selected measurement result in the MAC CE. If there is still remaining space in the uplink resource, the terminal device may select a measurement result of a candidate cell or a reference signal set with second strongest signal strength to be included in the MAC CE. The rest can be deduced by analogy. When the uplink resource is insufficient for including an additional measurement result, the terminal device no longer selects a measurement result to be included in the MAC CE, that is, performs truncation.

Rule 2: Select a measurement result of a reference signal based on signal strength.

For example, if there are a plurality of reference signals in a candidate cell or a reference signal set corresponding to a triggered event, the terminal device selects X strongest reference signals to be included in the MAC CE, where X may be specified as 1, may be specified as a special value, or may be configured by the network device. If the uplink resource can further include an additional measurement result, the terminal device selects X strongest reference signals of a candidate cell or a reference signal set corresponding to another triggered event, and includes the X strongest reference signals in the MAC CE. The rest can be deduced by analogy. When the uplink resource is insufficient for including an additional measurement result, the terminal device no longer selects a measurement result to be included in the MAC CE, that is, needs to perform truncation.

Rule 3: Select a measurement result based on a measurement result of a special cell.

For example, if carrier aggregation is used for a candidate cell corresponding to a triggered event, the terminal device selects a measurement result of an SpCell to be included in the MAC CE, and does not include a measurement result of an SCell in the MAC CE. Including the measurement result of the SpCell in the MAC CE may be understood as that the MAC CE includes the measurement result of the SpCell.

Rule 4: Select a measurement result based on an RSRP measurement result.

The terminal device selects an RSRP measurement result, instead of an SINR measurement result, a PMI measurement result, or another measurement result, to be included in the MAC CE.

Optionally, a measurement result of which measured quantity is selected by the UE may be configured by the network device. For example, the network device configures the terminal device to select, when the terminal device needs to perform MAC CE truncation, an RSRP to be included in the MAC CE, or an SINR to be included in the MAC CE, or a measurement result of another type of measured quantity to be included in the MAC CE.

It should be noted that, in addition to the foregoing preset rule, another preset rule may be further included. In a possible implementation, the network device may configure priorities of different candidate cells/reference signal sets/reference signals. When the terminal device needs to perform MAC CE truncation, the terminal device selects a measurement result corresponding to a candidate cell/reference signal set/reference signal with a high priority, and includes the measurement result in the MAC CE. In addition, the foregoing preset rules may be simultaneously used, or may be partially used. Optionally, the network device may specify a to-be-used preset rule in the measurement configuration information, or a to-be-used preset rule may be predefined in a protocol.

If the uplink resource is insufficient, the measurement result corresponding to the first reference signal and the measurement result corresponding to the second reference signal cannot be simultaneously sent via the first MAC layer signaling. In this case, the MAC layer may apply the preset rule to select the measurement result that corresponds to the first reference signal and that meets the preset rule, so that the first MAC layer signaling is preferentially used for sending the measurement result corresponding to the first reference signal. If there is still an uplink resource subsequently, the measurement result corresponding to the second reference signal may continue to be sent.

In other words, if there are a plurality of triggered events, but the MAC CE generated by the terminal device can include only measurement results of a part of triggered events due to limited uplink resources, after the terminal device sends the MAC CE, the terminal device cancels only reporting triggering corresponding to this part of events included in the MAC CE, and does not cancel reporting triggering corresponding to another event. In other words, the terminal device is still in the triggered state, and waits for a next uplink resource to generate a MAC CE for reporting.

It should be understood that, in this embodiment, the first indication information sent by the PHY layer to the MAC layer may be sent more than once. In other words, in some embodiments, the PHY layer measures the first reference signal, determines that the first reference signal meets the event trigger condition, and sends the first indication information to the MAC layer. In addition, the PHY layer may further measure the second reference signal, and when determining that the second reference signal meets the event trigger condition, may send the first indication information to the MAC layer again.

In some embodiments, when there is no available uplink resource for sending the MAC layer signaling, the terminal device may send scheduling request (scheduling request, SR) information to the network device. The scheduling request information is used to request an uplink resource for sending the measurement result. Correspondingly, the network device receives the scheduling request information. Specifically, when there is no available uplink resource for sending the MAC layer signaling (for example, a MAC CE), the MAC layer of the terminal device triggers an SR, and may indicate the PHY layer to send a PUCCH SR.

In some embodiments, the terminal device may receive a first scheduling request configuration and a second scheduling request configuration sent by the network device; and when a data amount of the measurement result is greater than or equal to a first preset value, select the first scheduling request configuration for sending the scheduling request information; or when the data amount of the measurement result is less than the first preset value, select the second scheduling request configuration for sending the scheduling request information. Correspondingly, the network device may send the first scheduling request configuration and the second scheduling request configuration to the terminal device, where the first scheduling request configuration is used when the data amount of the measurement result reported by the terminal device is greater than or equal to the first preset value, and the second scheduling request configuration is used when the data amount of the measurement result reported by the terminal device is less than the first preset value.

The network device may provide a plurality of PUCCH SR configurations for the terminal device, and the PUCCH SR configurations may be suitable for different quantities of triggered events. For example, the network device provides two PUCCH SR configurations for the terminal device, where the first one is used for a small quantity of triggered events (for example, less than M), and the second one is used for a large quantity of triggered events (for example, greater than or equal to M). When the terminal device has less than M triggered events, the first PUCCH SR resource may be used. After receiving the PUCCH SR resource, the network device learns that a quantity of triggered events is less than M, and then may provide a small quantity of uplink resources for the terminal device. When the terminal device has M or more triggered events, the second PUCCH SR resource may be used. After receiving the PUCCH SR resource, the network device learns that a quantity of triggered events is greater than or equal to M, and then may provide a large quantity of uplink resources for the terminal device. This manner helps the network device properly allocate the uplink resource, to avoid a case in which the uplink resource is insufficient for sending the MAC CE, and avoid a waste of excessive uplink resources.

In this embodiment, the PHY layer of the terminal device may measure the to-be-measured reference signal. If it is determined that the measurement result obtained through the measurement meets the event trigger condition, the PHY layer may send the first indication information to the MAC layer, so that the MAC layer is in the reporting triggered state. Then, the terminal device may send the measurement result via the MAC layer signaling (for example, a MAC CE). The network device may receive the measurement result, and perform, based on the measurement result, scheduling policy update or mobility management like cell handover or beam switching.

It should be understood that L2 signaling like MAC layer signaling (for example, a MAC CE) is generated and sent faster than L3 signaling. In addition, the measurement result is reported only when the measurement result meets the event trigger condition, and the measurement result is not reported when the measurement result does not meet the event trigger condition. Therefore, uplink resource occupation can be reduced. In other words, in this application, the PHY layer determines event triggering, and the measurement result is sent via the MAC layer signaling. When an event is triggered and there is an uplink resource, the terminal device can provide prompt reporting of the measurement result, and uplink resource occupation of the terminal device can be further reduced.

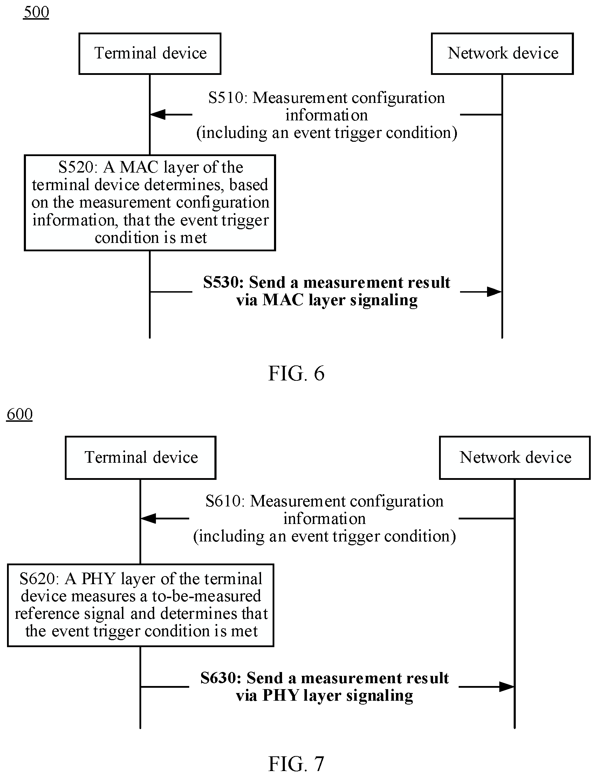

FIG. 6 is a schematic flowchart of another communication method 500 according to an embodiment of this application. It should be noted that, a difference between the communication method 500 and the communication method 400 lies in that in the communication method 500, a PHY layer or a MAC layer measures a to-be-measured reference signal, and the MAC layer determines whether an event trigger condition is met, while in the communication method 400, the PHY layer measures the to-be-measured reference signal and determines whether the event trigger condition is met. Therefore, for some content in the communication method 500, refer to the communication method 400.

As shown in FIG. 6, the communication method 500 includes at least the following steps.

S510: A network device sends measurement configuration information to a terminal device. Correspondingly, the terminal device receives the measurement configuration information.

The measurement configuration information may include an event trigger condition, and the event trigger condition may be understood as a preset condition that a measurement result of a measured quantity needs to meet.

Optionally, the measurement configuration information may further include a to-be-measured reference signal, a to-be-measured frequency, and a to-be-measured quantity. The to-be-measured frequency is to-be-measured frequency domain location information. The to-be-measured quantity may include at least one of the following: an RSRP, RSRQ, an SINR, a PMI, CQI, or an RI.

Optionally, the measurement configuration information may further include a preset rule, and the preset rule is used by the terminal device to select a measurement result for reporting. The preset rule may include at least one of the following: selecting the measurement result of a candidate cell based on signal strength; selecting the measurement result of a reference signal set based on signal strength; selecting the measurement result of a reference signal based on signal strength; selecting the measurement result based on a measurement result of a special cell; or selecting the measurement result based on a measurement result of a reference signal received power RSRP.

It should be noted that for other specific content of this step, refer to S410. Details are not described herein again.

S520: A MAC layer of the terminal device determines, based on the measurement configuration information, that the event trigger condition is met.

In some embodiments, S520 may specifically include: The MAC layer of the terminal device measures the to-be-measured reference signal, and determines that the event trigger condition is met.

Specifically, the MAC layer of the terminal device may measure the to-be-measured reference signal, and determine whether a measurement result (for example, the foregoing first measurement result) of the to-be-measured reference signal meets the event trigger condition. If it is determined that the event trigger condition is met, the MAC layer of the terminal device is in a reporting triggered state, and S530 is performed.

In some other embodiments, S520 may specifically include: A PHY layer of the terminal device measures the to-be-measured reference signal, and sends a measurement result obtained through the measurement to the MAC layer. The MAC layer may determine whether the measurement result of the to-be-measured reference signal meets the event trigger condition, that is, the MAC determines whether an event is met/triggered. If it is determined that the event trigger condition is met, the MAC layer of the terminal device is in a reporting triggered state, and S530 is performed.

In some embodiments, when the MAC layer determines that the measurement result of the to-be-measured reference signal meets the event trigger condition, the MAC layer is in the reporting triggered state, and a periodic reporting timer may be started. When the periodic reporting timer expires, the MAC layer is triggered to perform reporting, the periodic reporting timer is restarted, and the measurement result is sent via MAC layer signaling.

In some embodiments, when the MAC layer determines that the measurement result of the to-be-measured reference signal meets the event trigger condition, the periodic reporting timer is started; or if the MAC layer determines that the event trigger condition is not met, the periodic reporting timer is stopped.

In some embodiments, the MAC layer of the terminal device may periodically determine whether an event is triggered (for example, perform determining every 5 ms), that is, the MAC layer may periodically determine whether the measurement result of the to-be-measured reference signal meets the event trigger condition. Alternatively, the terminal device determines, in each preset time period, whether an event is triggered (for example, determining needs to be performed once in each time period of 5 ms), that is, the MAC layer may determine, in a preset time period, whether the measurement result of the to-be-measured reference signal meets the event trigger condition.

It should be understood that, for other content similar to that in the communication method 400 in this step, refer to S420 and S430. Details are not described herein again.

S530: The terminal device sends the measurement result to the network device via the MAC layer signaling. Correspondingly, the network device receives the measurement result.

In some embodiments, after the measurement result is sent to the network device via the MAC layer signaling, the reporting triggering for the MAC layer is canceled.

In some embodiments, the MAC layer signaling may include a media access control control element MAC CE, or other control signaling, for example, MAC layer control signaling that may appear in a future network system.

It should be understood that when there is an available uplink resource, the terminal device may generate a MAC CE, and the terminal device may send the MAC CE to the network device via the MAC layer signaling, where the MAC CE carries a measurement result (for example, the foregoing second measurement result). Further, after the terminal device sends the MAC CE, the MAC layer may cancel the reporting triggering. If the measurement result needs to be reported subsequently, the MAC layer needs to wait for triggering of a next reporting process, for example, the periodic reporting timer expires.

For content included in the MAC CE, refer to S430.

In some embodiments, the PHY layer measures a first reference signal and a second reference signal, determines that both the first reference signal and the second reference signal meet the event trigger condition, and sends first indication information to the MAC layer. The MAC layer sends, based on the first indication information and a preset rule via first MAC layer signaling, a measurement result corresponding to the first reference signal to the network device. In addition, a measurement result corresponding to the second reference signal may be further sent to the network device via second MAC layer signaling.

If the uplink resource is insufficient, the measurement result corresponding to the first reference signal and the measurement result corresponding to the second reference signal cannot be simultaneously sent via the first MAC layer signaling. In this case, the MAC layer may apply the preset rule to select the measurement result that corresponds to the first reference signal and that meets the preset rule, so that the first MAC layer signaling is preferentially used for sending the measurement result corresponding to the first reference signal.

In some embodiments, when there is no available uplink resource for sending the MAC layer signaling, the terminal device may send scheduling request SR information to the network device. The scheduling request information is used to request an uplink resource for sending the measurement result. Correspondingly, the network device receives the scheduling request information.

In some embodiments, the terminal device may receive a first scheduling request configuration and a second scheduling request configuration sent by the network device; and when a data amount of the measurement result is greater than or equal to a first preset value, select the first scheduling request configuration for sending the scheduling request information; or when the data amount of the measurement result is less than the first preset value, select the second scheduling request configuration for sending the scheduling request information. Correspondingly, the network device may send the first scheduling request configuration and the second scheduling request configuration to the terminal device, where the first scheduling request configuration is used when the data amount of the measurement result reported by the terminal device is greater than or equal to the first preset value, and the second scheduling request configuration is used when the data amount of the measurement result reported by the terminal device is less than the first preset value.

It should be understood that, for other content similar to that in the communication method 400 in this step, refer to S430. Details are not described herein again.

In this embodiment, the PHY layer or the MAC layer of the terminal device may measure the to-be-measured reference signal. The MAC layer determines that the measurement result obtained through the measurement meets the event trigger condition. If the event trigger condition is met, the MAC layer may be in the reporting triggered state. Then, the terminal device may send the measurement result via the MAC layer signaling (for example, a MAC CE). The network device may receive the measurement result, and perform, based on the measurement result, scheduling policy update or mobility management like cell handover or beam switching.

It should be understood that L2 signaling like MAC layer signaling (for example, a MAC CE) is generated and sent faster than L3 signaling. In addition, the measurement result is reported only when the measurement result meets the event trigger condition, and the measurement result is not reported when the measurement result does not meet the event trigger condition. Therefore, uplink resource occupation can be reduced. In other words, in this application, the MAC layer determines event triggering, and the measurement result is sent via the MAC layer signaling. When an event is triggered and there is an uplink resource, the terminal device can provide prompt reporting of the measurement result, and uplink resource occupation of the terminal device can be further reduced.

FIG. 7 is a schematic flowchart of another communication method 600 according to an embodiment of this application. It should be noted that a difference between the communication method 600 and the communication method 400 lies in that in the communication method 600, a PHY layer measures a to-be-measured reference signal, and the PHY layer reports a measurement result, while in the communication method 400, the PHY layer measures the to-be-measured reference signal, and the MAC layer reports the measurement result. Therefore, for some content in the communication method 500, refer to the communication method 400.

As shown in FIG. 7, the communication method 600 includes at least the following steps.

S610: A network device sends measurement configuration information to a terminal device. Correspondingly, the terminal device receives the measurement configuration information.

The measurement configuration information may include an event trigger condition, and the event trigger condition may be understood as a preset condition that a measurement result of a measured quantity needs to meet.

Optionally, the measurement configuration information may further include a to-be-measured reference signal, a to-be-measured frequency, and a to-be-measured quantity. The to-be-measured frequency is to-be-measured frequency domain location information. The to-be-measured quantity may include at least one of the following: an RSRP, RSRQ, an SINR, a PMI, CQI, or an RI.

Optionally, the measurement configuration information may further include a preset rule, and the preset rule is used by the terminal device to select a measurement result for reporting. The preset rule may include at least one of the following: selecting the measurement result of a candidate cell based on signal strength; selecting the measurement result of a reference signal set based on signal strength; selecting the measurement result of a reference signal based on signal strength; selecting the measurement result based on a measurement result of a special cell; or selecting the measurement result based on a measurement result of a reference signal received power RSRP.

It should be noted that for other specific content of this step, refer to S410. Details are not described herein again.

S620: A PHY layer of the terminal device measures the to-be-measured reference signal and determines that the event trigger condition is met.

Specifically, the PHY layer (namely, a layer L1) of the terminal device may measure the to-be-measured reference signal, and determine whether a measurement result (for example, the foregoing first measurement result) of the to-be-measured reference signal meets the event trigger condition. If it is determined that the event trigger condition is met, the terminal device may perform S530.

It should be understood that for specific content of this step, refer to S420. Details are not described herein again.

S630: The terminal device sends the measurement result to the network device via PHY layer signaling. Correspondingly, the network device receives the measurement result.

In this step, the measurement result may be reported to the network device via the PHY layer signaling (for example, uplink control information UCI). The UCI may be carried on a PUCCH or a PUSCH.

In some embodiments, the terminal device sends the UCI by using the PUCCH. The UCI may carry the measurement result. In addition to a measurement result of the to-be-measured quantity, the measurement result may further indicate at least one of the following information: an event triggered cell identifier, an event triggered reference signal set identifier, or an event triggered reference signal/beam identifier.

In some other embodiments, the terminal device sends the UCI by using the PUSCH, and the UCI may carry the measurement result. After an event is triggered, the terminal device may use a recently available PUSCH resource to multiplex the UCI onto the PUSCH resource, and send the UCI to the network device. The network device may obtain the measurement result from the UCI.

In this embodiment, the PHY layer of the terminal device may measure the to-be-measured reference signal. If it is determined that the measurement result obtained through the measurement meets the event trigger condition, the terminal device may send the measurement result via the PHY layer signaling (for example, UCI). The network device may receive the measurement result, and perform, based on the measurement result, scheduling policy update or mobility management like cell handover or beam switching.

It should be understood that, in this application, the PHY layer determines whether an event is triggered. When an event is triggered and there is an uplink resource, the terminal device can provide prompt reporting of the measurement result. In addition, uplink resource occupation of the terminal device can be further reduced.

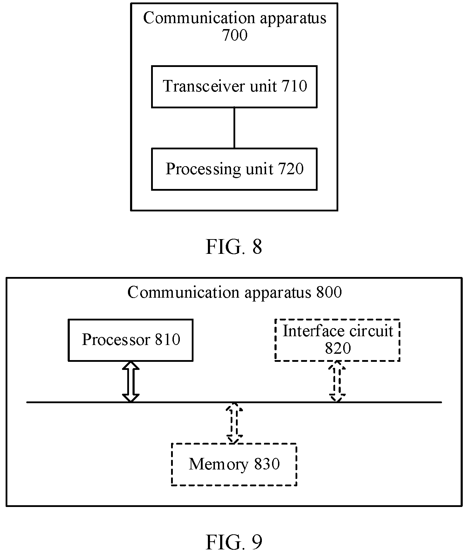

The foregoing describes the communication method 400 to the communication method 600 provided in this application. The following describes communication apparatuses provided in this application with reference to FIG. 8 and FIG. 9.

FIG. 8 is a block diagram of a communication apparatus according to an embodiment of this application. The communication apparatus 700 includes a transceiver unit 710 and a processing unit 720.

The transceiver unit 710 may be configured to implement a corresponding information transceiver function. The transceiver unit 720 may also be referred to as a communication interface or a communication unit. The processing unit may be configured to perform a processing operation.

For example, the communication apparatus 700 further includes a storage unit. The storage unit may be configured to store instructions and/or data. The processing unit 720 may read the instructions and/or the data in the storage unit, so that the communication apparatus 700 implements actions in the foregoing method embodiments.

In an implementation, the communication apparatus 700 may be the terminal device in the foregoing embodiments, or may be a component (for example, a chip) of the terminal device. The transceiver unit 710 and the processing unit 720 may be configured to implement related operations of the terminal device.

The transceiver unit 710 is configured to receive measurement configuration information sent by a network device, where the measurement configuration information includes an event trigger condition. The processing unit 720 is configured to: measure a to-be-measured reference signal, and determine that the event trigger condition is met. The transceiver unit 710 is further configured to send first indication information to a media access control MAC layer. The transceiver unit 710 is further configured to send a measurement result to the network device based on the first indication information via MAC layer signaling.

In some embodiments, the transceiver unit 710 is further configured to: receive the first indication information, to trigger the MAC layer to perform reporting; and send the measurement result to the network device via the MAC layer signaling.

In some embodiments, the processing unit 720 is further configured to start a periodic reporting timer when the first indication information is received; and the transceiver unit 710 is further configured to: when the periodic reporting timer expires, trigger the MAC layer to perform reporting, restart the periodic reporting timer, and send the measurement result via the MAC layer signaling.

In some embodiments, the processing unit 720 is further configured to: after the measurement result is sent to the network device via the MAC layer signaling, cancel the reporting triggering for the MAC layer.

In some embodiments, the processing unit 720 is further configured to start the periodic reporting timer when the first indication information is received; the transceiver unit 710 is further configured to send second indication information to the MAC layer if it is determined that the event trigger condition is not met; and the processing unit 720 is further configured to stop the periodic reporting timer based on the second indication information.

In some embodiments, the processing unit 720 is further configured to: measure a first reference signal and a second reference signal, and determine that both the first reference signal and the second reference signal meet the event trigger condition; the sending unit is further configured to send the first indication information to the MAC layer; and the transceiver unit 710 is further configured to send, based on the first indication information and a preset rule via the MAC layer signaling, a measurement result corresponding to the first reference signal to the network device.

In some embodiments, the transceiver unit 710 is further configured to: when there is no available uplink resource for sending the MAC layer signaling, send scheduling request information to the network device, where the scheduling request information is used to request an uplink resource for sending the measurement result.

In some embodiments, the transceiver unit 710 is further configured to receive a first scheduling request configuration and a second scheduling request configuration sent by the network device; and the processing unit 720 is further configured to: when a data amount of the measurement result is greater than or equal to a first preset value, select the first scheduling request configuration for sending the scheduling request information; or the processing unit 720 is further configured to: when the data amount of the measurement result is less than the first preset value, select the second scheduling request configuration for sending the scheduling request information.

In another implementation, the communication apparatus 700 may be the network device in the foregoing embodiments, or may be a component (for example, a chip) of the network device. The transceiver unit 710 and the processing unit 720 may be configured to implement related operations of the network device.

The transceiver unit 710 is configured to: send measurement configuration information to a terminal device, where the measurement configuration information includes an event trigger condition, and the event trigger condition is a preset condition that a measurement result of a measured quantity needs to meet; and receive a measurement result sent by the terminal device, where the measurement result is obtained by measuring a to-be-measured reference signal.

In some embodiments, the transceiver unit 710 is configured to receive scheduling request information sent by the terminal device, where the scheduling request information is used to request an uplink resource for sending the measurement result.

In some embodiments, the transceiver unit 710 is configured to send a first scheduling request configuration and a second scheduling request configuration to the terminal device, where the first scheduling request configuration is used when a data amount of the measurement result reported by the terminal device is greater than or equal to a first preset value, and the second scheduling request configuration is used when the data amount of the measurement result reported by the terminal device is less than the first preset value.

In some embodiments, the processing unit 720 is configured to perform, based on the measurement result, scheduling policy update or mobility management like cell handover or beam switching.

It may be understood that a specific process in which the units perform the foregoing corresponding steps is described in detail in the foregoing method embodiments. For brevity, details are not described herein again.

The transceiver unit 710 may be replaced by a transceiver (for example, a sending unit in the transceiver unit 710 may be replaced by a transmitter, and a receiving unit in the transceiver unit 710 may be replaced by a receiver), and another unit, for example, the processing unit 720, may be replaced by a processor, to separately perform receiving and sending operations and a related processing operation in the method embodiments.

In addition, the transceiver unit 710 may alternatively be a transceiver circuit (for example, may include a receiver circuit and a transmitter circuit), and the processing unit 720 may be a processing circuit.

FIG. 9 is a block diagram of another communication apparatus according to an embodiment of this application. The communication apparatus 800 includes a processor 810. The processor 810 is coupled to a memory 830. The processor 810 is configured to execute a program or instructions stored in the memory 830, or read data stored in the memory 830, to perform related actions in the foregoing method embodiments. For example, there may be one or more processors 810.

For example, the communication apparatus 800 may further include a communication interface 820, where the communication interface 820 is configured to receive and/or send a signal.

For example, the communication apparatus 800 may further include the memory 830, and the memory 830 is configured to store a computer program or instructions and/or data. The memory 830 and the processor 810 may be integrated, or may be disposed separately. Certainly, the communication apparatus 800 may alternatively not include the memory 830, and the memory 830 may be disposed outside the communication apparatus 810. For example, there may be one or more memories 830.

For example, the processor 810, the communication interface 820, and the memory 830 are connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in the figure, but this does not mean that there is only one bus or only one type of bus.

It may be understood that the processor 810 mentioned in embodiments of this application may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), or a programmable logic device (programmable logic device, PLD). The PLD may be a complex programmable logic device (complex programmable logic device, CPLD), a field programmable logic gate array (field programmable gate array, FPGA), a generic array logic (generic array logic, GAL), or any combination thereof.

It may be further understood that the memory 830 mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

It may be understood that, if embodiments of this application are implemented in a form of software and sold or used as an independent product, a corresponding program (which may also be referred to as code or instructions) may be stored in a readable storage medium. Therefore, this application further provides a readable storage medium, including a program. When the program is run on a device or a computer, the device or the computer is caused to perform any possible implementation of the foregoing solutions.

The readable storage medium may include any medium that can store program code, for example, a USB flash drive, a removable hard disk, a ROM, a RAM, a magnetic disk, or an optical disc.

The technical solutions of this application may be embodied in a form of a software product. Therefore, this application further provides a computer program product, where the computer program product includes instructions; and when the instructions are run on a computer, the computer is caused to perform any possible implementation of the foregoing solutions.

In addition, an embodiment of this application further provides a computer-readable storage medium, where the computer-readable storage medium stores a computer program or instructions; and when the computer program or the instructions are run on a computer, the computer is caused to perform any possible implementation of the foregoing solutions.

In addition, an embodiment of this application further provides a chip. The chip includes at least one processor, and when program instructions are executed by the at least one processor, any possible implementation of the foregoing solutions is executed.

Optionally, the chip may further include an interface circuit, and the interface circuit is configured to send and/or receive data, instructions, or information to and/or from the processor.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device and comprises:
receiving measurement configuration information from a network device, wherein the measurement configuration information comprises an event trigger condition;
measuring, by a physical PHY layer, a to-be-measured reference signal, determining that the event trigger condition is met, and sending first indication information to a media access control MAC layer; and
sending, by the MAC layer, a measurement result to the network device based on the first indication information via MAC layer signaling.

2. The method according to claim 1, wherein sending, by the MAC layer, the measurement result to the network device based on the first indication information via the MAC layer signaling comprises:
receiving, by the MAC layer, the first indication information, to trigger the MAC layer to perform reporting; and
sending the measurement result to the network device via the MAC layer signaling.

3. The method according to claim 1, wherein sending, by the MAC layer, the measurement result to the network device based on the first indication information via the MAC layer signaling comprises:
starting a periodic reporting timer when the MAC layer receives the first indication information; and
when the periodic reporting timer expires, triggering the MAC layer to perform reporting, restarting the periodic reporting timer, and sending the measurement result via the MAC layer signaling.

4. The method according to claim 2 or 3, wherein the method further comprises:
after the measurement result is sent to the network device via the MAC layer signaling, canceling the reporting triggering for the MAC layer.

5. The method according to any one of claims 1 to 4, wherein the method further comprises:
starting the periodic reporting timer when the MAC layer receives the first indication information;
sending, by the PHY layer, second indication information to the MAC layer if determining that the event trigger condition is not met; and
stopping, by the MAC layer, the periodic reporting timer based on the second indication information.

6. The method according to any one of claims 1 to 5, wherein measuring, by the physical PHY layer, the to-be-measured reference signal, determining that the event trigger condition is met, and sending the first indication information to the media access control MAC layer comprises:
measuring, by the PHY layer, a first reference signal and a second reference signal, determining that both the first reference signal and the second reference signal meet the event trigger condition, and sending the first indication information to the MAC layer; and
sending, by the MAC layer, the measurement result to the network device based on the first indication information via the MAC layer signaling comprises:
sending, by the MAC layer based on the first indication information and a preset rule via the MAC layer signaling, a measurement result corresponding to the first reference signal to the network device.

7. The method according to claim 6, wherein the measurement configuration information further comprises the preset rule, and the preset rule comprises at least one of the following:
selecting the measurement result of a candidate cell based on signal strength;
selecting the measurement result of a reference signal set based on signal strength;
selecting the measurement result of a reference signal based on signal strength;
selecting the measurement result based on a measurement result of a special cell; or
selecting the measurement result based on a measurement result of a reference signal received power RSRP.

8. The method according to any one of claims 1 to 7, wherein the method further comprises:
when there is no available uplink resource for sending the MAC layer signaling, sending scheduling request information to the network device, wherein the scheduling request information is used to request an uplink resource for sending the measurement result.

9. The method according to claim 8, wherein the method further comprises:
receiving a first scheduling request configuration and a second scheduling request configuration from the network device; and
when a data amount of the measurement result is greater than or equal to a first preset value, selecting the first scheduling request configuration for sending the scheduling request information; or
when the data amount of the measurement result is less than the first preset value, selecting the second scheduling request configuration for sending the scheduling request information.

10. The method according to any one of claims 1 to 9, wherein the MAC layer signaling comprises a MAC CE.

11. The method according to claim 10, wherein the MAC CE comprises at least one of the following: an identifier of a reference signal set, an identifier of a serving cell, an identifier of a candidate cell, an identifier of a secondary cell, an identifier of a reference signal, a to-be-measured quantity, or a measurement result corresponding to a to-be-measured quantity.

12. The method according to any one of claims 1 to 11, wherein the event trigger condition comprises a cell-level event trigger condition, a beam-level event trigger condition, and a reference signal set-level event trigger condition, and the measurement result comprises a cell-level measurement result, a beam-level measurement result, and a reference signal set-level measurement result.

13. A communication apparatus, comprising a transceiver unit and a processing unit, wherein
the transceiver unit is configured to receive measurement configuration information from a network device, wherein the measurement configuration information comprises an event trigger condition;
the processing unit is configured to: measure a to-be-measured reference signal, and determine that the event trigger condition is met;
the transceiver unit is further configured to send first indication information to a media access control MAC layer; and
the transceiver unit is further configured to send a measurement result to the network device based on the first indication information via MAC layer signaling.

14. The apparatus according to claim 13, wherein the transceiver unit is further configured to:
receive the first indication information, to trigger the MAC layer to perform reporting; and
send the measurement result to the network device via the MAC layer signaling.

15. The apparatus according to claim 13, wherein
the processing unit is further configured to start a periodic reporting timer when the first indication information is received; and
the transceiver unit is further configured to: when the periodic reporting timer expires, trigger the MAC layer to perform reporting, restart the periodic reporting timer, and send the measurement result via the MAC layer signaling.

16. The apparatus according to claim 14 or 15, wherein
the processing unit is further configured to: after the measurement result is sent to the network device via the MAC layer signaling, cancel the reporting triggering for the MAC layer.

17. The apparatus according to any one of claims 13 to 16, wherein
the processing unit is further configured to start the periodic reporting timer when the first indication information is received;
the transceiver unit is further configured to: if it is determined that the event trigger condition is not met, send second indication information to the MAC layer; and
the processing unit is further configured to stop the periodic reporting timer based on the second indication information.

18. The apparatus according to any one of claims 13 to 17, wherein
the processing unit is further configured to: measure a first reference signal and a second reference signal, and determine that both the first reference signal and the second reference signal meet the event trigger condition; and the sending unit is further configured to send the first indication information to the MAC layer; and
the transceiver unit is further configured to send, based on the first indication information and a preset rule via the MAC layer signaling, a measurement result corresponding to the first reference signal to the network device.

19. The apparatus according to claim 18, wherein the measurement configuration information further comprises the preset rule, and the preset rule comprises at least one of the following:
selecting the measurement result of a candidate cell based on signal strength;
selecting the measurement result of a reference signal set based on signal strength;
selecting the measurement result of a reference signal based on signal strength;
selecting the measurement result based on a measurement result of a special cell; or
selecting the measurement result based on a measurement result of a reference signal received power RSRP.

20. The apparatus according to any one of claims 13 to 19, wherein
the transceiver unit is further configured to: when there is no available uplink resource for sending the MAC layer signaling, send scheduling request information to the network device, wherein the scheduling request information is used to request an uplink resource for sending the measurement result.

21. The apparatus according to claim 20, wherein
the transceiver unit is further configured to receive a first scheduling request configuration and a second scheduling request configuration from the network device; and
the processing unit is further configured to: when a data amount of the measurement result is greater than or equal to a first preset value, select the first scheduling request configuration for sending the scheduling request information; or
the processing unit is further configured to: when the data amount of the measurement result is less than the first preset value, select the second scheduling request configuration for sending the scheduling request information.

22. The apparatus according to any one of claims 13 to 21, wherein the MAC layer signaling comprises a MAC CE.

23. The apparatus according to claim 22, wherein the MAC CE comprises at least one of the following: an identifier of a reference signal set, an identifier of a serving cell, an identifier of a candidate cell, an identifier of a secondary cell, an identifier of a reference signal, a to-be-measured quantity, or a measurement result corresponding to a to-be-measured quantity.

24. The apparatus according to any one of claims 13 to 23, wherein the event trigger condition comprises a cell-level event trigger condition, a beam-level event trigger condition, and a reference signal set-level event trigger condition, and the measurement result comprises a cell-level measurement result, a beam-level measurement result, and a reference signal set-level measurement result.

25. A communication apparatus, comprising a processor, wherein the processor is coupled to a memory, the memory is configured to store a computer program or instructions, and the processor is configured to execute the computer program or the instructions in the memory, to cause the apparatus to perform the method according to any one of claims 1 to 12.

26. A computer-readable storage medium, wherein the computer-readable storage medium stores a computer program or instructions; and when the computer program or the instructions are run on a computer, the computer is caused to perform the method according to any one of claims 1 to 12.

27. A computer program product, wherein the computer program product comprises instructions; and when the instructions are run on a computer, the computer is caused to perform the method according to any one of claims 1 to 12.

28. A chip, wherein the chip comprises at least one processor, and when program instructions are executed by the at least one processor, the method according to any one of claims 1 to 12 is performed.
